# EUROPEAN PATENT SPECIFICATION

(11) **EP 3 807 551 B1**
(45) Date of publication and mention of the grant of the patent: **24.08.2022**
(21) Application number: 19730967.7
(22) Date of filing: 24.05.2019
(51) Int. Cl.: F16D 65/12

(54) **DISC ASSEMBLY OF DISC BRAKE**
SCHEIBENANORDNUNG FÜR SCHEIBENBREMSE
ENSEMBLE DISQUE DE FREIN À DISQUE

(30) Priority: 14.06.2018 IT 201800006333
(43) Date of publication of application: 21.04.2021
(73) Proprietor: BREMBO S.p.A., 24035 Curno (BERGAMO) (IT)
(72) Inventor: MILANESI, Andrea, 24035 Curno, Bergamo (IT)
(74) Representative: Crippa, Paolo Ernesto
(86) International application number: PCT/IB2019/054326
(87) International publication number: WO 2019/239240

(56) References cited:
- EP-A1- 0 127 932
- EP-A1- 0 987 462
- EP-A1- 2 581 620
- EP-A1- 2 740 961
- WO-A1-03/058087

## Description

### . Field of the invention

**.** In its most general aspect, the present invention relates to a disc assembly of disc brake which combines a particular structural lightness and simplicity with the increased resistance to wear and to thermal-mechanical stresses.

**.** According to a particular embodiment, the present invention relates to an assembly comprising a bell adapted to be associated with a braking band, for example a ventilated type band, to form a disc for disc brake comprising a braking band capable of increased cooling efficiency in conjunction with an increased resistance to wear and to thermal-mechanical stresses.

**.** The present invention in particular relates to a disc comprising a bell having a rotation axis X-X and a braking band associated therewith. Band and bell are manufactured in separate pieces and are connected to each other by means of axial A-A and tangential T-T restraints, when considered locally, or a circumferential C-C restraint, when considered as a whole.

**.** In other words, the present invention relates to a braking band assembly connected to a bell to form a disc capable of rotating about a rotation axis X-X coincident with or parallel to an axial direction A-A. This assembly extends away from said rotation axis X-X along radial directions R-R orthogonal to said axial direction A-A and along circumferential directions C-C orthogonal to said axial direction A-A and to said radial directions R-R, as well as locally defining tangential directions T-T precisely orthogonal to said axial direction A-A and orthogonal to the radial direction R-R passing through said point.

### . Background art

**.** It is known that the braking devices commonly used in motor vehicles comprise a metal disc, which is fastened to the wheel hub, straddled by a brake caliper fastened to the vehicle stub axle or hub carrier and provided with pads equipped with friction seals.

**.** The disc in particular comprises a braking band provided with at least one braking surface, commonly two opposite braking surfaces, and one bell fastened to the wheel hub.

**.** The calipers, which are hydraulically operated by means of cylinder/piston units, press the pads against the braking surfaces of the braking band. The braking action thus is generated by the friction between the pads and the braking surface of the braking band of the brake disc.

**.** The friction of the pads against the braking band of the disc causes the dissipation of the kinetic energy of the heated masses to be braked, which generates the raising of the disc temperature, which is particularly high at the braking surface.

**.** For this reason, it is required for the braking band to have an increased cooling efficiency and to be particularly resistant both to the wear generated by the abrasive action of the pads and to temperatures.

**.** Such features of resistance to wear instead are not required of the bell, for which the use of a material which allows obtaining a complex geometry with increased mechanical features, is advantageous.

**.** For the aforesaid reasons, it is known - especially in high performance braking devices - to manufacture the disc in two parts: the braking band made of a material which is resistant to temperatures and wear, and the bell made of material that has the above-indicated mechanical features.

**.** The materials commonly used for manufacturing the braking band are materials such as cast iron or similar alloys, which stand out for the increased resistance to wear, increased hardness and simultaneously fragility, however sensitive to a deformation as the temperature changes.

**.** In a different manner, the materials commonly used for the bell are metal materials such as steel, galvanized aluminum alloys or the like.

**.** In order to take into consideration the different thermal expansion of the materials and the fragility of the braking band, the coupling between the bell and the braking band often is made by means of a joint with tangential and axial restraints and without any radial restraint so as to allow the different radial expansions of the two pieces due to the temperature and to avoid the occurrence of cracks or gaps in the composite material of the braking band.

. In particular, the tangential restraint of the aforesaid coupling, which is indispensable for transmitting the braking torque, is carried out by means of a cogged coupling between radial cogs along the outer surface of the bell and corresponding radial cogs provided along the inner surface of the braking band.

**.** A tangential restraint made by means of the cogged coupling between the cogs of the bell and those of the band is described for example, in WO02/01088 or in EP1091137.

**.** Other solutions are known from EP1798438A1, WO03089802A1**,** EP1466106, WO0238979, EP0127932A1, WO03058087A1.

**.** The known couplings between the bell and the band adapted to restrain them tangentially and axially often are intrinsically complex and furthermore imply a structural and manufacturing

**.** The known couplings between the bell and the band adapted to restrain them tangentially and axially often are intrinsically complex and furthermore imply a structural and manufacturing complexity, especially of the bell. The complexity of the bell structure implies a significant weight thereof and apparently is a significant drawback of the bells and of the discs of the known art.

**.** In addition to the aforesaid drawback correlated with the increased weight of the structure is the problem of the cooling efficiency when a braking band coupled in a complex manner to the bell is relatively low and not optimal, especially for the excessive invasiveness of these known couplings.

**.** In addition to the above, the need is particularly felt to reduce the components for assembling the bell to the braking band while simultaneously simplifying the assembly of the bell to the band.

**.** Moreover, the need is increasingly felt in vehicles to accommodate increasingly cumbersome devices within the wheel rims as well as to reduce the axial space available for the disc of a disc brake.

**.** Therefore, the need is increasingly felt to reduce the axial volume of the disc, and in particular the depth of the bell.

**.** At the same time, the need is strongly felt to keep as well as increase the cooling efficiency of a disc obtained by assembling a bell and a band manufactured separately and made of two different materials as described above.

**.** The problem of the optimal cooling efficiency in the discs for disc brakes made from a bell and a braking band in a single piece is resolved by implementing a so-called ventilated braking band.

**.** Unfortunately, the implementation of such a configuration for the braking band of a disc made of two pieces is made ineffective by the known couplings between band and bell, which, due to the very nature thereof, especially involve the inlet area of the air into the ventilation channels of the band. In other words, the bell to be connected to the braking band in the known solutions occupies the lower edge of the braking band, thus blocking or significantly reducing the free access of the cooling air in the ventilation channel of the ventilated braking band.

### . Solution

**.** Therefore, it is the object of the present invention to provide a braking band and a bell assembly having structural and functional features such as to meet the aforesaid need and o overcome the drawbacks mentioned above with reference to the discs of the known art.

**.** These and other objects are achieved by a disc assembly of disc brake according to claim 1, as well as by a method for assembling a disc assembly of disc brake according to claim **18.**

**.** Certain advantageous embodiments are the subject of the dependent claims.

**.** The problems of the known art may be resolved and the needs may be met and the connection between the braking band and the bell may also be simplified and the components of the coupling may be reduced and the operations for assembling the band to the bell may be speeded up due to the assembly proposed, thus simultaneously ensuring an increased connection accuracy and operating safety.

**.** Furthermore, the overall volume of the assembly may be reduced due to the solution proposed, particularly in axial direction A-A, thus reducing the depth, and therefore also the weight, of the bell.

### . Drawings

**.** Further features and advantages of the invention will be apparent from the description provided below of preferred embodiments thereof, given by way of non-limiting examples, with reference to the accompanying drawings, in which:

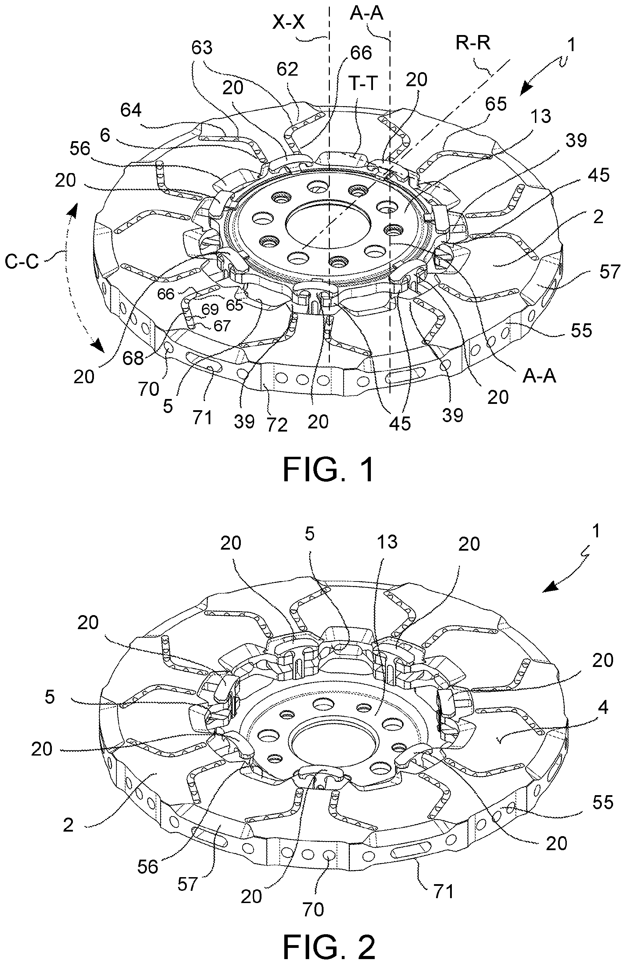

- figure 1 depicts an axonometric view, on the wheel side, of a disc assembly according to the invention;
- figure 2 depicts an axonometric view, on the vehicle side, of the assembly in figure 1;

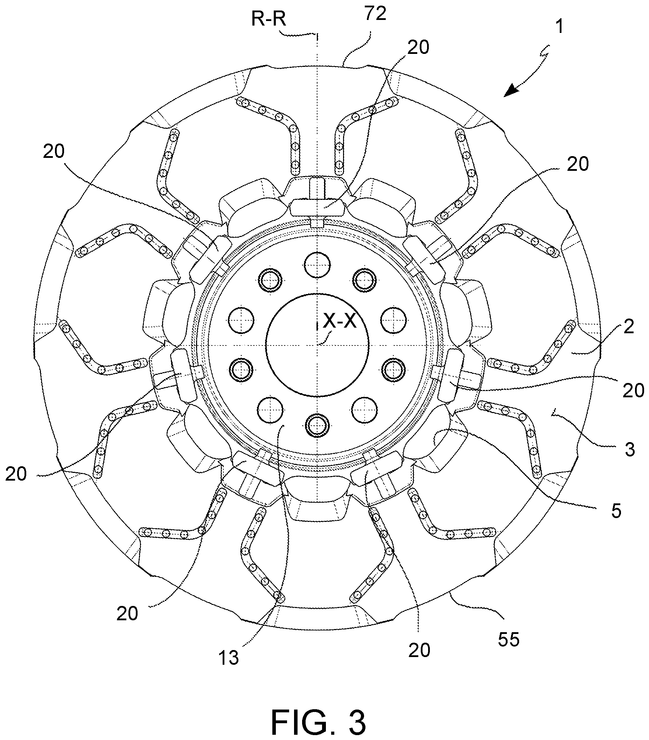

- figure 3 depicts a front view of the assembly in figure 1;

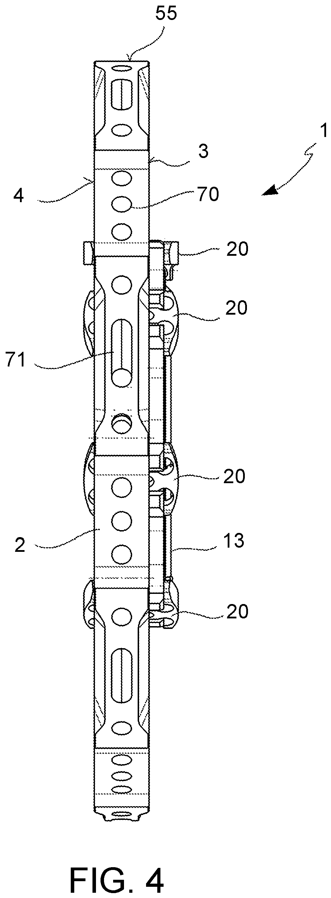

- figure 4 shows a side view of the assembly in figure 1;

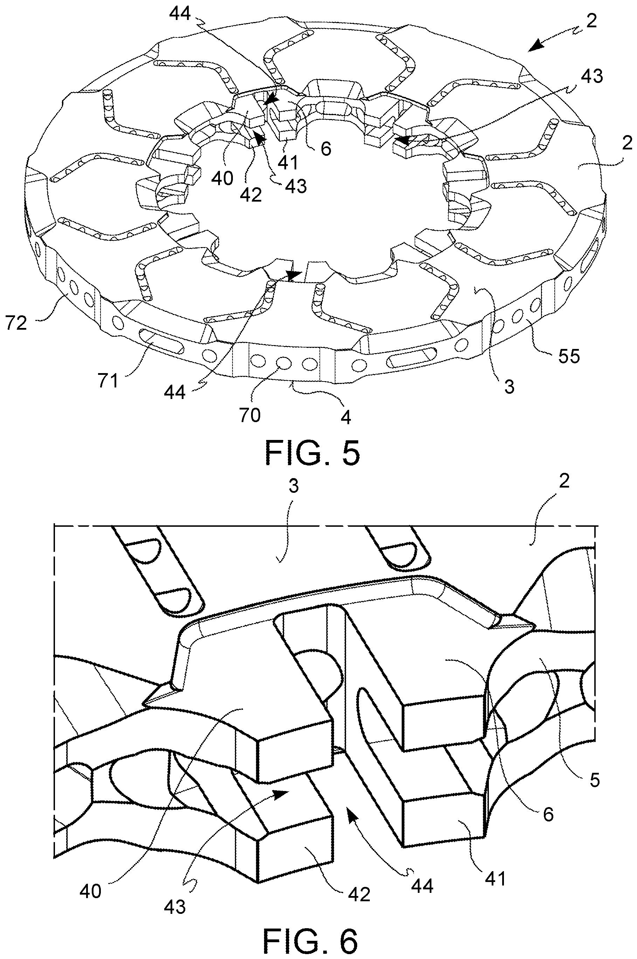

- figure 5 depicts an axonometric view of the braking band alone of the assembly in figure 1;
- figure 6 shows an enlargement of figure 4, at one of the band connecting elements;

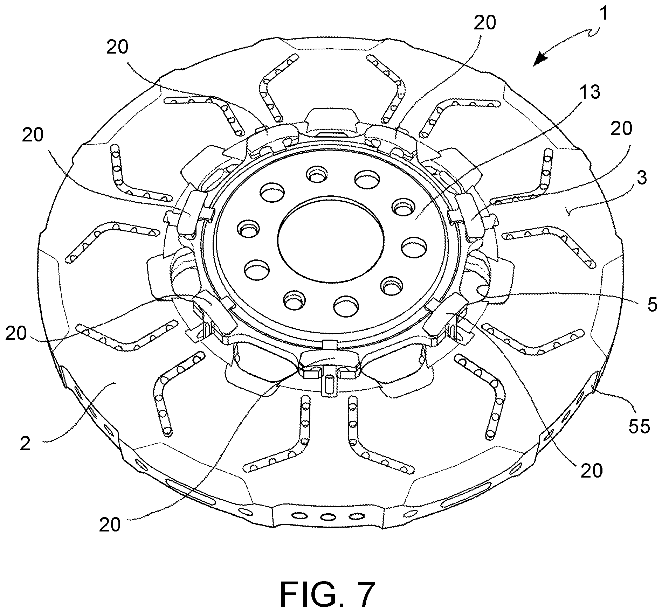

- figure 7 depicts an axonometric view, on the wheel side, of an assembly according to a further embodiment;

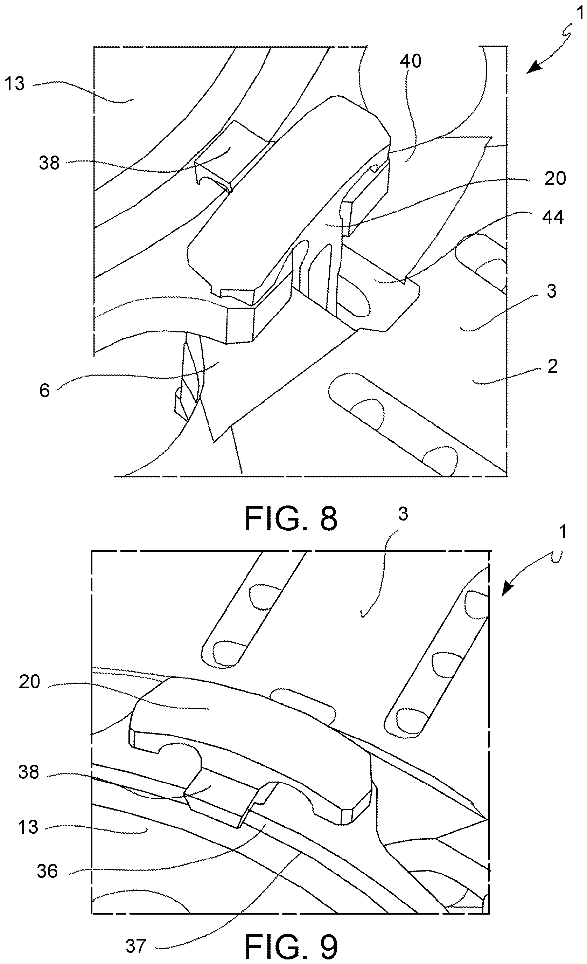

- figures 8 and 9 show two enlargements from opposite sides of a connection between braking band and bell comprising a driving element;

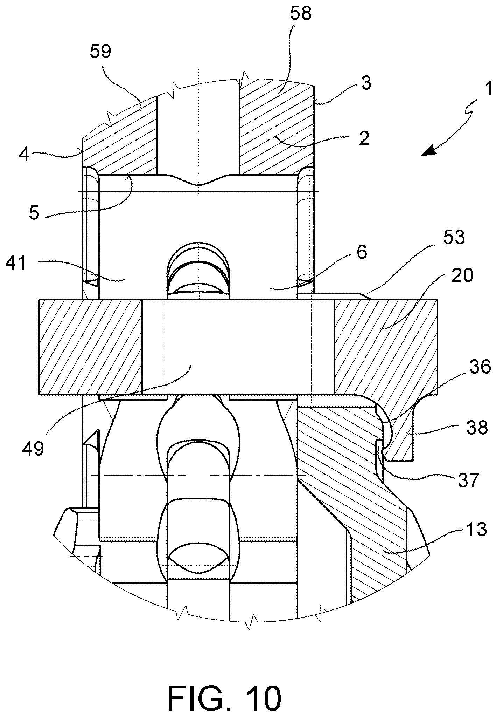

- figure 10 depicts a sectional view along an axial-radial plane of a detail of a disc assembly which highlights the coupling between braking band and bell and the reduced axial dimension thereof;

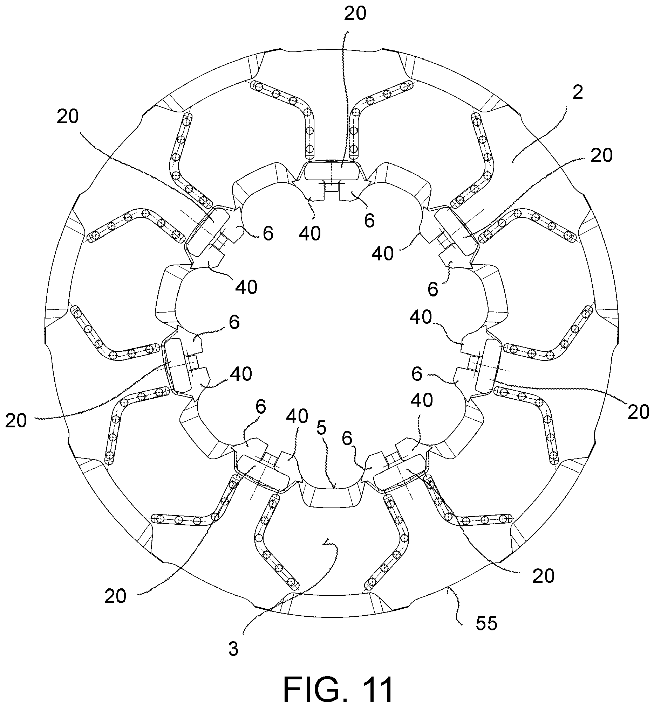

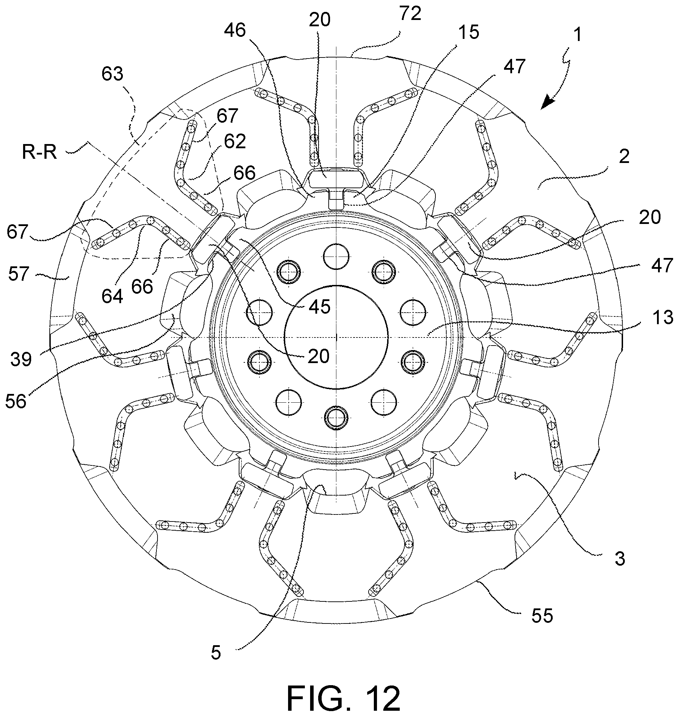

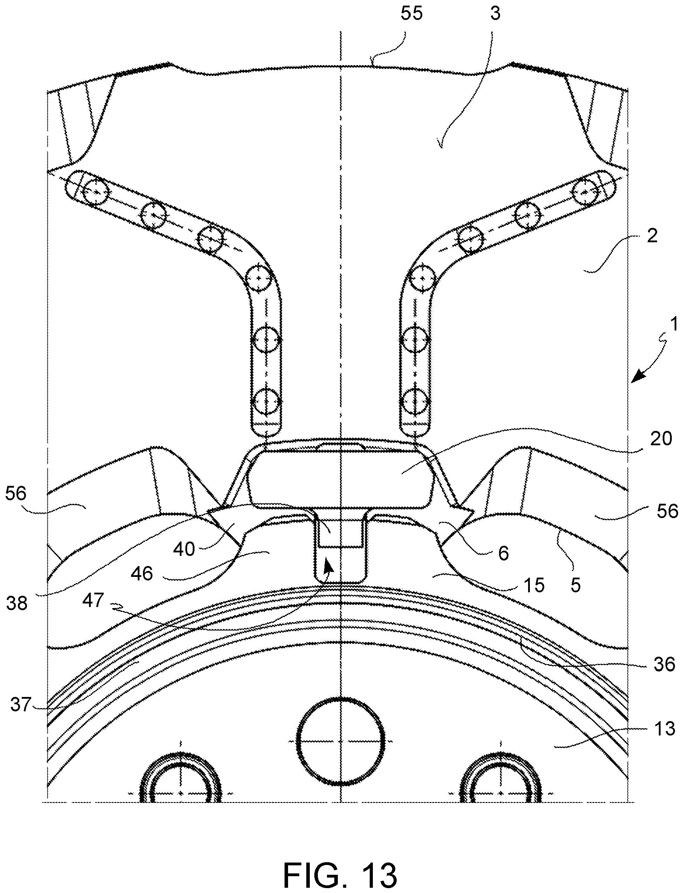

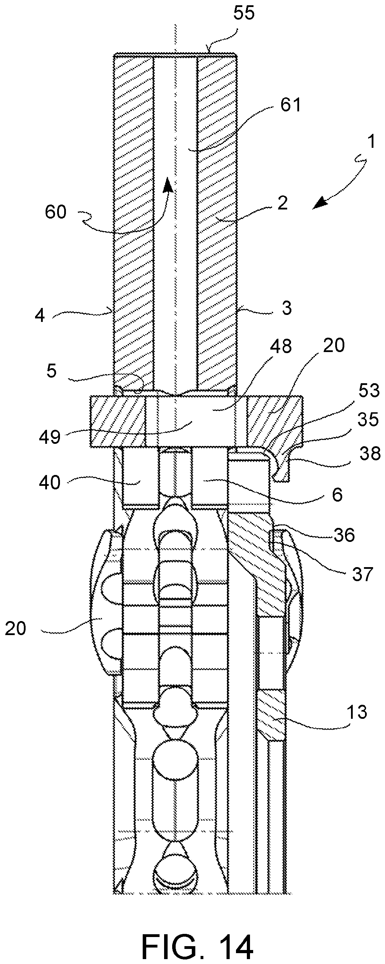

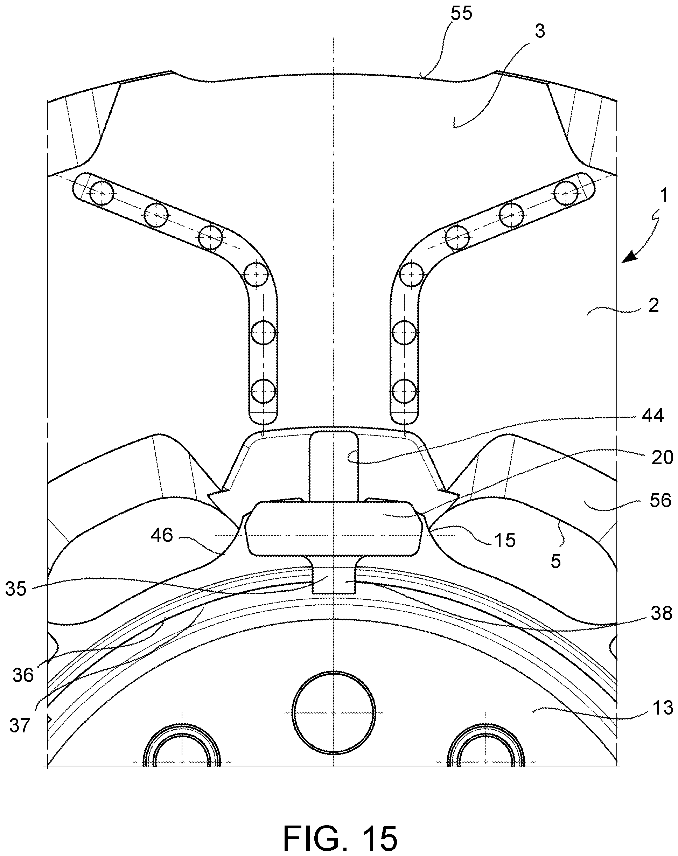

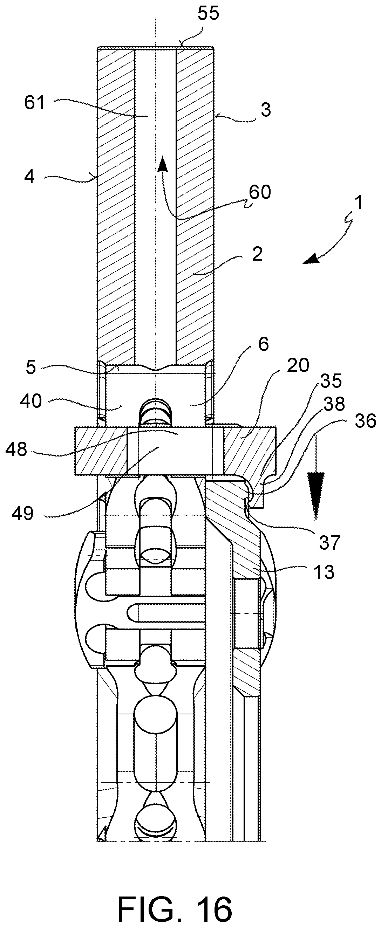

- figures 11 to 16 show various assembly steps of the braking band on a bell, where driving elements are coupled to the braking band by taking care to position them radially outside the coupling position of the bell, then the bell is rested and only then are the driving elements that sandwich tighten the braking band with the bell caused to slide by moving them radially towards the rotation axis of the assembly, thus securely coupling the braking band to the bell in tangential and axial direction and leaving the braking band free to be deformed in radial direction;

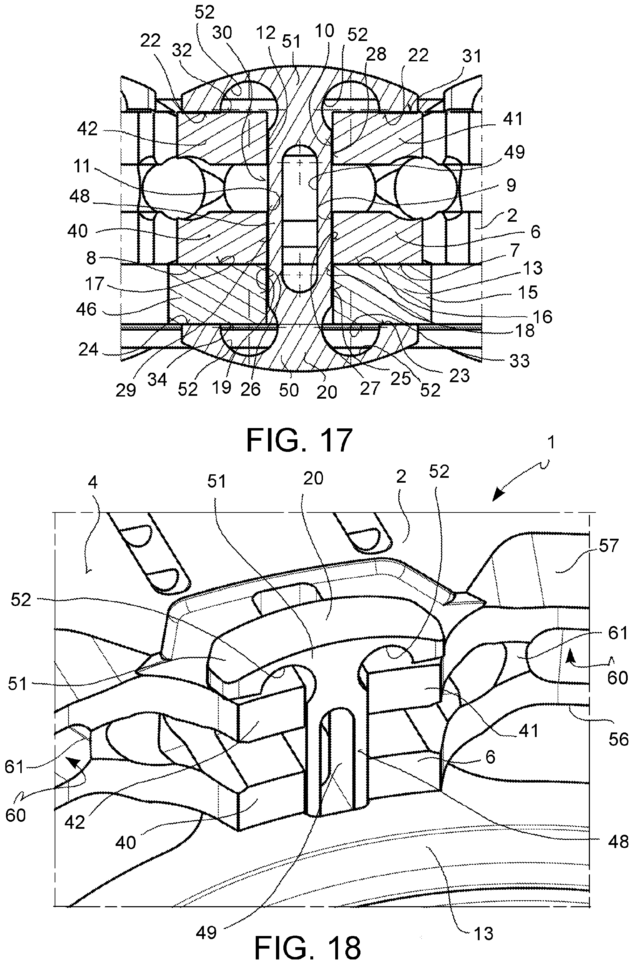

- figure 18 shows a detail of the coupling, on the vehicle side, between braking band and bell;

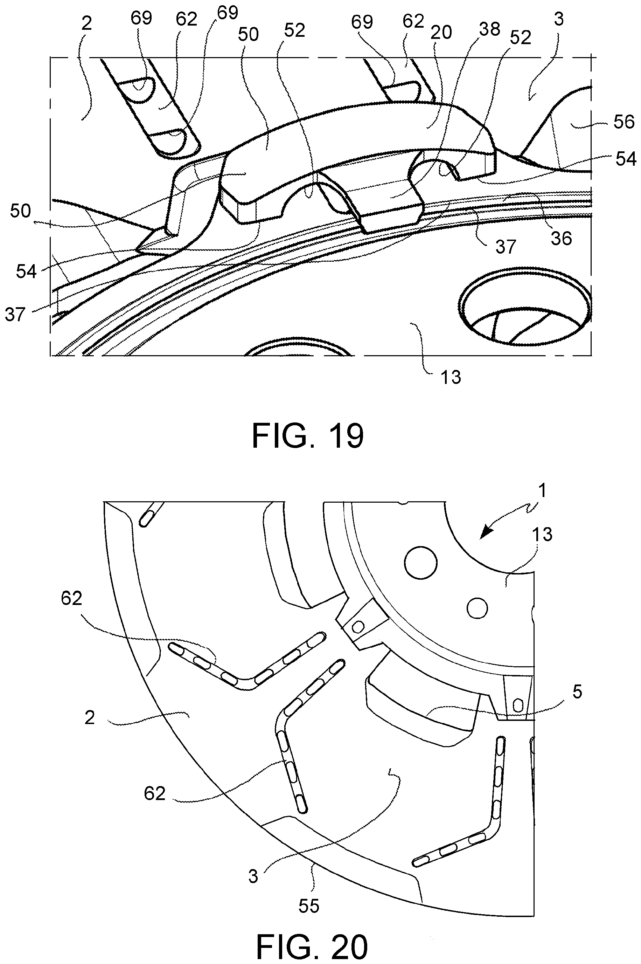

- figure 19 depicts the coupling detail in figure 18, from the wheel side;
- figure 20 shows a front view of a detail of an assembly according to a further embodiment;

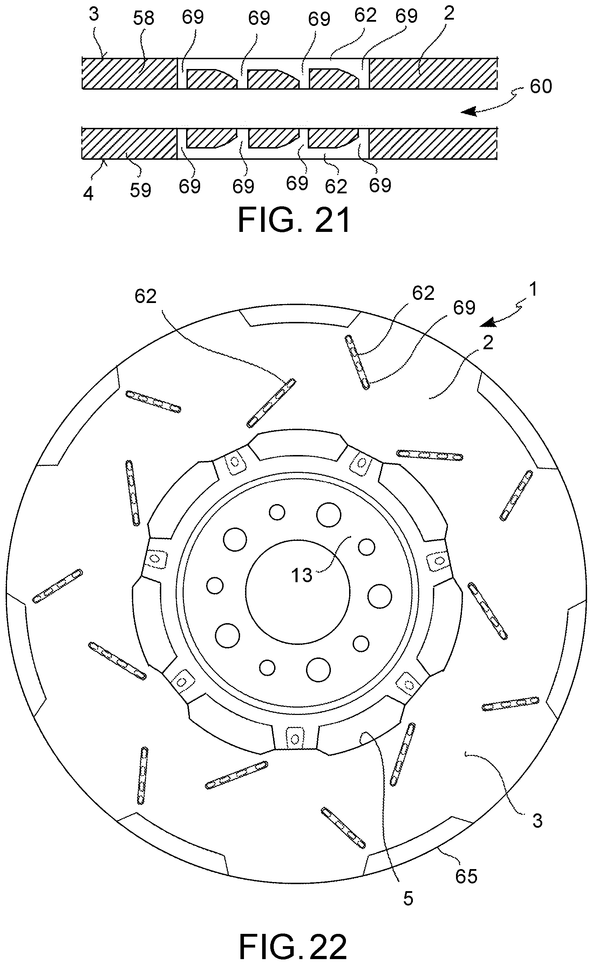

- figure 21 depicts a local sectional view of a braking band at a groove;
- figure 22 depicts a front view of an assembly according to a further embodiment again;

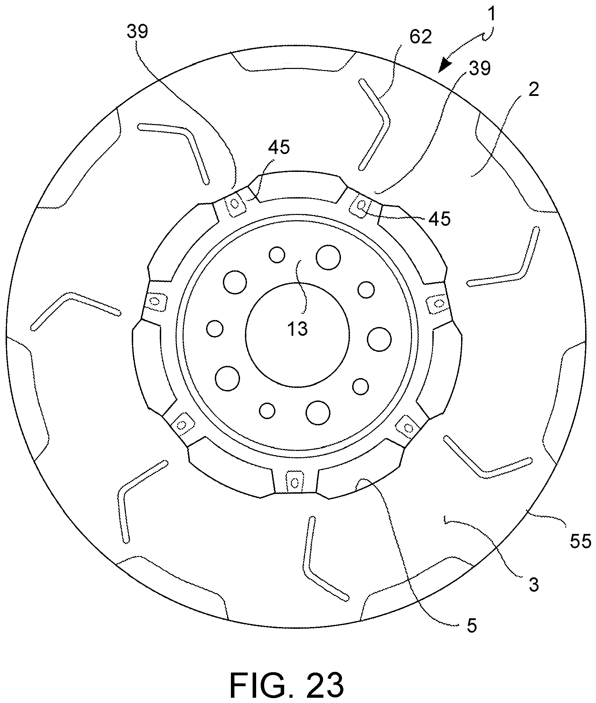

- figure 23 shows a front view of an assembly according to a further embodiment;

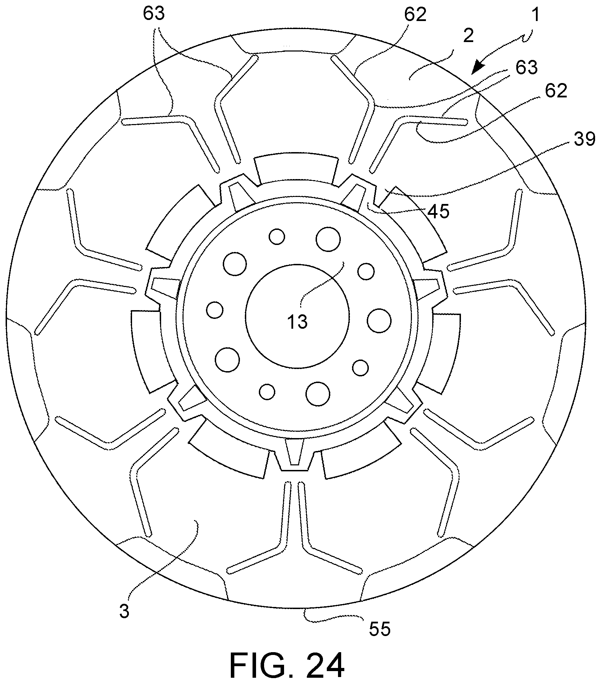

- figure 24 depicts a front view of an assembly according to a further embodiment.

### . Description of some preferred embodiments

**.** The term "two-sided restraint" means a support on opposite surfaces, thus creating a restraint in the same direction but in opposite reaction directions.

**.** The term "avoid a two-sided restraint" means that a component rests on a surface of a second component, exerting an action only in one way of a direction but remaining free to raise from said surface along said direction and an opposite way, if not subjected to other restraints by other components.

**.** The term "avoid restraining in radial direction" does not mean that a resistance to the radial movement R-R does not occur, but rather that it is not entirely prevented. For example, a braking band 2 may be connected to a bell 13 by means of a connection force directed in axial direction A-A which creates a friction between the contact surfaces of the braking band 2 and of bell 13, a friction which creates a resistance to the deformation in radial direction of band 2 if for example, when stressed by an increase in temperature which is different from that of bell 13, it tends to expand more than bell 13, thus moving away from bell 13. This friction counters the radial deformation of the braking band 2 but does not prevent it, therefore falling under this definition.

**.** The term "seal effect", which name results from the application of the pressurized receptacles characterized by the presence of a much more yielding seal of the parts subjected to compression, means the effect that occurs in all the connections in which there are taught elements and compressed elements (connected elements or portions thereof actually subjected to compression). The seal effect is fundamental for determining in which proportion the forces applied to the connection cause a further load of the taught elements and a discharge of the compressed ones, respectively, considering the rigidities of the various components. As with the preloading, also traction forces which are outside the connection and acting on the connection itself tend to lengthen the taught component and relax the compressed component. The increase of the force on the taught component and the decrease of force on the compressed component may be predefined by conveniently selecting the stretches of the components or the elasticity thereof. Since the locking force of the tightened components decreases with the application of an external traction force, the action on the taught component increases only by the difference between the traction force and the compression force. Therefore, the residual force alone acts on the separation surface between the components in operating conditions, and it is this force that is to ensure the coupling. The main advantage is that the detachment between the surfaces of the components will be more difficult, thus ensuring a continuous contact and an increased uniformity of conduct of the connection subjected to vibrations.

**.** According to a general embodiment, a disc assembly 1 of disc brake is adapted to cooperate with a brake caliper to exert a braking action on a vehicle.

**.** Said assembly 1 is adapted to rotate about a rotation axis X-X coincident with or parallel to an axial direction A-A.

**.** Said assembly 1 extends away from said rotation axis X-X along radial directions R-R orthogonal to said axial direction A-A and along circumferential directions C-C orthogonal to said axial direction A-A and to said radial directions R-R, as well as locally or precisely defining tangential directions T-T precisely orthogonal to said axial direction A-A and orthogonal to the radial direction R-R passing through said point.

**.** Said assembly comprises a braking band 2, a bell 13, for the connection of the disc assembly 1 to a support of a vehicle, and at least one driving element 20.

**.** Said bell 13 comprises at least one driving bell surface 18; 19 extending along said axial A-A and radial R-R directions, thus forming a tangential abutment surface for bell 13.

**.** Said bell 13 advantageously rests on at least one surface 33, 34 of the braking band 2, or a plurality of surfaces 33, 34 of the braking band 2 substantially coplanar with one another, thus avoiding a two-sided restraint at least between said bell and said braking band 2.

**.** Said braking band 2 comprises at least one driving band surface 9; 10; 11; 12 extending along said axial A-A and radial R-R directions, thus forming at least one tangential abutment surface for band 2.

**.** Said at least one driving element 20 slidingly rests on said at least one driving band surface 9; 10; 11; 12.

**.** Said at least one driving element 20 is selectively movable along said at least one driving band surface 9; 10; 11; 12, at least passing:
- from a position in which it avoids resting on bell 13;
- to a position in which it rests on the bell and restrains said bell 13 to said band in axial direction A-A and in circumferential direction C-C;
- thus avoiding said braking band 2 from being restrained to said bell 13 in radial direction R-R.

**.** According to one embodiment, said braking band 2 comprises opposite braking surfaces 3, 4 adapted to cooperate with brake pads to exert a braking action.

**.** According to one embodiment, said braking band comprises at least one radial band connecting extension 6 protruding substantially in radial direction R-R towards said rotation axis X-X. Said at least one radial band connecting extension 6 comprises at least one bell resting surface 7; 8 extending along said circumferential C-C and radial R-R directions, thus forming an axial abutment surface for a bell 13.

**.** Said at least one radial band connecting extension 6 comprises at least one driving band surface 9; 10; 11; 12 extending along said axial A-A and radial R-R directions, thus forming a tangential abutment surface for band 2.

**.** Said at least one radial band connecting extension 6 comprises at least a first opposite axial band surface 31; 32 extending along said circumferential C-C and radial R-R directions, thus forming an axial abutment surface.

**.** According to one embodiment, said assembly further comprises a bell 13 for connecting the disc assembly 1 to a support of a vehicle, such as an axle-journal of a vehicle, where said bell 13 comprises at least one radial bell connecting extension 15 protruding substantially in radial direction R-R away from said rotation axis A-A. Said at least one radial bell connecting extension 15 comprises at least one band resting surface 16; 17 extending along said circumferential C-C and radial R-R directions, thus forming an axial abutment surface for said braking band 2.

**.** Said at least one radial bell connecting extension 15 comprises at least one driving bell surface 18; 19 extending along said axial A-A and radial R-R directions, thus forming a tangential abutment surface for bell 13.

**.** Said at least one radial bell connecting extension 15 comprises at least a first opposite axial bell surface 33; 34 extending along said circumferential C-C and radial R-R directions, thus forming an axial abutment surface.

**.** According to one embodiment, said assembly 1 further comprises at least one driving element 20, where said driving element 20 comprises at least one first axial resting surface 21; 22 extending along said circumferential C-C and radial R-R directions, thus forming an axial abutment surface for said band 2.

**.** Said driving element 20 comprises at least a second axial resting surface 23; 24, opposite to said first axial resting surface 21; 22, extending along said circumferential C-C and radial R-R directions, thus forming an axial abutment surface for said bell 13.

**.** Said driving element 20 comprises at least one tangential driving bell surface 25; 26 extending along said axial A-A and radial R-R directions, thus forming a tangential abutment surface for bell 13.

**.** Said driving element 20 comprises at least one tangential driving band surface 27; 28; 29; 30 extending along said axial A-A and radial R-R directions, thus forming a tangential abutment surface for band 2.

**.** According to one embodiment, said at least one band resting surface 16; 17 of said bell 13 rests on said at least one bell resting surface 7; 8 of said band 2, thus avoiding said bell 13 from resting on said band 2 on further opposite facing surfaces of band 2 with respect to said at least one bell resting surface 7; 8 of said band 2, or avoiding two-sided resting in axial direction A-A.

**.** According to one embodiment, said at least one driving band surface 9; 10; 11; 12 rests on said at least one tangential driving band surface 27; 28; 29; 30.

**.** According to one embodiment, said at least a first axial resting surface 21, 22 rests on at least a first opposite axial band surface 31; 32.

**.** According to one embodiment, said driving element 20 slides on said at least one driving band surface 9; 10; 11; 12, passing
- from a first disengaged position, in which said driving element 20 avoids resting on said at least one driving bell surface 18; 19 and said at least a first opposite axial bell surface 33; 34;
- to an engaged position, in which said driving element 20 rests on said at least one driving bell surface 18; 19 and said at least a first opposite axial bell surface 33; 34, thus blocking said bell 13 to said band 2 to prevent related movements in axial direction A-A and in circumferential direction C-C, less elastic deformations of said driving element 20 and of said at least one radial band connecting extension 6, and leaving said braking band 2 free to be deformed in radial direction R-R.

**.** According to one embodiment, said first tangential driving bell surface 25, said first tangential driving band surface 27, said second tangential driving band surface arranged on the same plane as said first tangential driving band surface 28, are a surface which lies on a single plane when said braking band 2 is connected to said bell 13.

**.** According to one embodiment, said second tangential driving bell surface 26, said third tangential driving band surface arranged opposite to said first tangential driving band surface 29 and said fourth tangential driving band surface arranged on the same plane as said third tangential driving band surface 30, are a surface which lies on a single plane when said braking band 2 is connected to said bell 13.

**.** According to one embodiment, said bell 13 comprises a bell edge 36 which forms an outer radial abutment bell seat 37 which prevents a movement in radial direction R-R away from the rotation axis A-A.

**.** According to one embodiment, said at least one driving element 20 comprises at least one radial driving element extension 35. Said radial driving element extension 35 comprises a fastening tooth 38 which is at least partly and removably inserted into said outer radial abutment bell seat 37.

**.** According to one embodiment, said braking band 2 comprises opposite braking surfaces 3, 4 adapted to cooperate with brake pads to exert said braking action.

**.** According to one embodiment, said braking band 2 comprises at least one radial band connecting extension 6 protruding substantially in radial direction R-R towards said rotation axis X-X.

**.** According to one embodiment, said at least one radial band connecting extension 6 comprises at least one bell resting surface 7; 8 extending along said circumferential C-C and radial R-R directions, thus forming an axial abutment surface for a bell 13.

**.** According to one embodiment, said at least one radial band connecting extension 6 comprises at least one driving band surface 9; 10; 11; 12 extending along said axial A-A and radial R-R directions, thus forming a tangential abutment surface for band 2.

**.** According to one embodiment, said at least one radial band connecting extension 6 comprises at least a first opposite axial band surface 31; 32 extending along said circumferential C-C and radial R-R directions, thus forming an axial abutment surface.

**.** According to one embodiment, said braking band 2 comprises a plurality of band connecting elements 39.

**.** According to one embodiment, each band connecting element 39 comprises:
- said radial band connecting extension or first radial band connecting extension 6,
- a second radial band connecting extension 40,
- a third radial band connecting extension 41,
- a fourth radial band connecting extension 42;

**.** According to one embodiment, said first, second, third and fourth radial band connecting extensions 6, 40, 41, 42 for each band connecting element 39 surround said driving element 20, thus creating two-sided restraints in tangential direction T-T.

**.** According to one embodiment, each band connecting element 39 has four radial band connecting extensions 6, 40, 41, 42 opposed two-by-two and separated by a circumferential band connecting element channel 43 and a radial axial band window 44 adapted to slidingly house said driving element 20.

**.** According to one embodiment, said band connecting element 39 comprises a channel extending in radial R-R and axial A-A directions between radial band extension portions thereof, which allows said band connecting element 39, if stressed, to undergo an elastic deformation in tangential direction T-T of said band connecting element 39.

**.** This tangential deformation allows having a "seal effect" in tangential direction when the driving element 20 is preloaded in tangential direction T-T.

**.** According to one embodiment, said band connecting element 39 comprises a channel extending in radial R-R and circumferential C-C directions between radial band extension portions thereof, which allows said band connecting element 39, if stressed, to undergo an elastic deformation in axial direction A-A of said band connecting element 39.

**.** This elastic reaction of the band connecting element 39 allows a seal effect in axial direction A-A to be obtained in the braking band 2 bell 13 coupling when the driving element 20 preloads the coupling itself in axial direction A-A.

**.** According to one embodiment, said mutually opposite first opposite axial band surface and first opposite axial bell surface 31, 33, second opposite axial band surface arranged on the same plane as said first opposite axial band surface and second opposite axial bell surface arranged on the same plane as said first opposite axial bell surface 32, 34, are present on radial band connecting extension portions 6, 40, 41, 42 which are separated from one another by at least one channel which allows the elastic deformation of the band connecting element 39, thus allowing a preloaded coupling to the driving element 20, thus obtaining the benefits of the seal effect in case of vibrations of the disc, which reduces knocks and noises and ensures constant sealing and friction on sliding surfaces between driving element 20 and braking band 2 and bell 13, thus ensuring an expansion of the band always under the optimal conditions set forth in the project.

**.** According to one embodiment, said bell 13 comprises a plurality of bell connecting elements 45.

**.** According to one embodiment, each bell connecting element 45 comprises:
- said radial bell connecting extension, or first radial bell connecting extension 15,
- a second radial bell connecting extension 46.

**.** According to one embodiment, said first and second radial bell connecting extensions 15, 46 for each bell connecting element 45 surround said driving element 20, thus creating two-sided restraints in tangential direction T-T.

**.** According to one embodiment, each bell connecting element 45 has two opposed radial bell connecting extensions 15, 46 separated by a radial axial bell window 47 adapted to slidingly house said driving element 20.

**.** According to one embodiment, said braking band comprises at least one radial band connecting extension 6 protruding substantially in radial direction R-R towards said rotation axis X-X.

**.** According to one embodiment, said at least one radial band connecting extension 6 comprises at least one bell resting surface 7; 8 extending along said circumferential C-C and radial R-R directions, thus forming an axial abutment surface for a bell 13.

**.** According to one embodiment, said at least one radial band connecting extension 6 comprises at least one driving band surface 9; 10; 11; 12 extending along said axial A-A and radial R-R directions, thus forming a tangential abutment surface for band 2.

**.** According to one embodiment, said at least one radial band connecting extension 6 comprises at least a first opposite axial band surface 31; 32 extending along said circumferential C-C and radial R-R directions, thus forming an axial abutment surface.

**.** According to one embodiment, said at least one bell resting surface 7; 8 are two bell resting surfaces 7; 8 and said two bell resting surfaces 7 and 8 are coplanar and facing the same side as the braking band 2.

**.** According to one embodiment, said two bell resting surfaces 7 and 8 are formed on two adjacent but separate radial band connecting extensions 6, 40.

**.** According to one embodiment, said at least one driving band surface 9; 10; 11; 12 consists of four driving band surfaces 9 and 10 and 11 and 12.

**.** Said four driving band surfaces 9 and 10 and 11 and 12 are coplanar two-by-two 9, 10 and 11, 12 and opposite two-by-two 9, 11 and 10, 12, thus forming resting and sliding guides for said driving element 20.

**.** According to one embodiment, said four driving band surfaces 9 and 10 and 11 and 12 are formed in four adjacent but separate radial band connecting extensions 6, 40, 41, 42.

**.** According to one embodiment, said bell 13 comprises at least one radial bell connecting extension 15 protruding substantially in radial direction R-R away from said rotation axis A-A.

**.** According to one embodiment, said at least one radial bell connecting extension 15 comprises at least one band resting surface 16; 17 extending along said circumferential C-C and radial R-R directions, thus forming an axial abutment surface for said braking band 2.

**.** According to one embodiment, said at least one radial bell connecting extension 15 comprises at least one driving bell surface 18; 19 extending along said axial A-A and radial R-R directions, thus forming a tangential abutment surface for bell 13.

**.** According to one embodiment, said at least one radial bell connecting extension 15 comprises at least a first opposite axial bell surface 33; 34 extending along said circumferential C-C and radial R-R directions, thus forming an axial abutment surface.

**.** According to one embodiment, said at least one driving bell surface 18; 19 consists of two driving bell surfaces 18 and 19, which are mutually opposed to form a two-sided guide for said driving element 20.

**.** According to one embodiment, said two driving bell surfaces 18 and 19 are formed in two separate radial bell connecting extensions 15, 46.

**.** According to one embodiment, said driving element 20 is a single body and is made in a single piece.

**.** According to one embodiment, said driving element 20 comprises a middle driving element body 48 adapted to rest against said braking band 2 and said bell 13 in tangential direction T-T.

**.** According to one embodiment, said middle driving element body 48 comprises a driving element opening 49 which allows said driving element 20, if stressed, to undergo an elastic deformation in tangential direction T-T of said driving element 20, thus obtaining the benefits of the seal effect in case of vibrations of the disc, which reduces knocks and noises and ensures constant sealing and friction on sliding surfaces between driving element 20 and braking band 2 and bell 13, thus ensuring an expansion of the band always under the optimal conditions set forth in the project.

**.** This connection allows a seal effect to be obtained in tangential direction when the driving element 20 preloads the braking band 2 and/or bell 13 in tangential direction T-T.

**.** According to one embodiment, said driving element 20 comprises two opposite resting flanges 50, 51 for resting and preloading in axial direction A-A the driving element on the braking band 2 on one side, and on bell 13, on the other side.

**.** According to one embodiment, each of said resting flanges 50, 51 connects to a middle driving element body 48 by means of driving element discharges 52 adapted to avoid the notching effect and contact with braking band 2 and bell 13.

**.** According to one embodiment, the driving element 20 is "I"-shaped, with two opposed resting flanges 50, 51 forming said opposed abutment surfaces 21 and 23 and or 24 and 22.

**.** According to one embodiment, the tangential driving between said braking band 2 and said bell 13 only occurs by means of said driving element 20, thus avoiding a direct contact in tangential T-T or circumferential C-C direction between said braking band 2 and said bell 13.

**.** According to one embodiment, said radial band connecting extension or first radial band connecting extension 6 and said opposite second radial band connecting extension 40, and said radial bell connecting extension or first radial bell connecting extension 15 and said second radial bell connecting extension 46 and/or said third radial band connecting extension 41 and said opposite fourth radial band connecting extension 42 allow said braking band 2 to be guided in both forward and reverse directions of the vehicle.

**.** According to one embodiment, said braking band 2 is made of a different material from the material of said bell 13.

**.** According to one embodiment, said braking band 2 is made of cast iron.

**.** According to one embodiment, said braking band 2 is made of titanium.

**.** According to one embodiment, said braking band 2 is made of a titanium alloy.

**.** According to one embodiment, said bell 13 is made of aluminum.

**.** According to one embodiment, said bell 13 is made of steel.

**.** According to one embodiment, said driving element 20 is made of steel.

**.** According to one embodiment, said driving element 20 is made of titanium.

**.** The use of the titanium advantageously allows particular advantages to be obtained. Indeed, the titanium displays low density, high resistance similar to steel and twice that of aluminum, low modulus of elasticity, low thermal conductivity, low thermal expansion, excellent resistance to corrosion, ease of processing, biocompatibility, it is not magnetic and it is capable of sustaining extreme temperatures due to the high melting temperature thereof.

**.** According to one embodiment, said braking band 2 is made of composite material, for example of material comprising carbon-ceramic material or CCM.

**.** According to one embodiment, said bell 13 is made of composite material.

**.** According to one embodiment, said bell connecting element 45 comprises bell chamfers or slides 53 adapted to allow the movement of said driving element 20 so that the driving element may rest on said bell connecting element 45 and restrain said braking band 2 to said bell 13.

**.** According to one embodiment, said bell chamfers or slides 53 are within said at least one radial bell connecting extension 15; 46 to allow the forced sliding of the driving element 20 and the sandwich tightening of bell 13 against the braking band 2.

**.** According to one embodiment, said driving element 20 comprises driving element chamfers or slides 54 adapted to allow the movement/sliding of said driving element 20 so that the driving element may slide and rest on said bell connecting element 45 and restrain said braking band 2 to said bell 13.

**.** According to one embodiment, said braking band 2 comprises opposite braking surfaces 3, 4 and a radial inner braking band edge 5 and a radial outer braking band edge 55.

**.** According to one embodiment, said braking band 2 comprises at least one inclined inner braking band surface 56 joining at least one of said braking surfaces 3, 4 and said radial inner braking band edge 5.

**.** According to one embodiment, said braking band 2 comprises at least one inclined outer braking band surface 57 joining at least one of said braking surfaces 3, 4 and said radial outer braking band edge 55.

**.** According to one embodiment, at least one inclined inner braking band surface 56 joining at least one of said braking surfaces 3, 4 and said radial inner braking band edge 5 is provided between two adjacent band connecting elements 39 associated with two adjacent bell connecting elements 45, thus creating broad windows between bell 13 and braking band 2.

**.** According to one embodiment, said braking band 2 comprises two band plates 58, 59 separated by at least one ventilation channel 60 and connected by band plate connecting elements 61 [for example, fins or pegs] which delimit said at least one ventilation channel 60.

**.** According to one embodiment, said ventilation channel 60 leads into said radial outer braking band edge 55 with at least one circular-section opening; and/or wherein - said ventilation channel 60 leads into said radial outer braking band edge 55 with at least one elliptical-section opening.

**.** According to one embodiment, said braking band 2 comprises opposite braking surfaces 3, 4; and/or wherein
- at least one of said braking surfaces 3, 4 comprises at least one braking band groove 62 or first braking band groove.

**.** According to one embodiment, said at least one braking band groove 62 consists of two grooves 64 to form a groove module 63.

**.** According to one embodiment, said first and second braking band grooves 62, 64 of each module 63 are symmetric and mirror-like with respect to an axis having radial direction R-R.

**.** According to one embodiment, said at least one groove module 63 is a plurality of groove modules 63 distributed equally spaced apart circumferentially on said braking band 2.

**.** According to one embodiment, each of said grooves 62, 64 is a groove with edge forming a closed perimeter, or closed edge groove 65, thus avoiding grooves which lead outwards from said braking surfaces 3, 4.

**.** According to one embodiment, each of said grooves 62, 64 comprises a straight groove stretch 66 extending in a substantially straight manner and arranged about parallel to a radial direction R-R.

**.** According to one embodiment, each of said grooves 62, 64 comprises an inclined straight groove stretch 67 extending in a substantially straight manner and arranged inclined with respect to said straight groove stretch 66, and is open and joined with said straight groove stretch 66.

**.** According to one embodiment, the theoretical straight extension of said straight groove stretch 66 extending in a substantially straight manner and arranged about parallel to a radial direction R-R is arranged adjacent to the sides of said at least one radial band connecting extension 6.

**.** According to one embodiment, each of said grooves 62, 64 comprises a groove bottom 68 and where a plurality of groove holes 69 is within said groove bottom 68.

**.** According to one embodiment, said plurality of groove holes 69 puts said ventilation channel 60 into fluid communication with said braking surfaces 3, 4.

**.** According to one embodiment, said braking band outer edge 55 comprises radial outer edge recesses 72.

**.** A method for connecting a braking band 2 to a bell 13 is described below.

**.** In this method, there are provided the steps of:
- providing an assembly 1 as described in any one of the embodiments described above;
- resting said driving element 20 on said braking band 2 in a position which allows to freely couple said bell 13 to the braking band 2;
- resting said bell 13 on said braking band 2;
- moving said driving element 20 by passing:
- from a position in which said driving element 20 avoids resting on bell 13;
- to a position in which said driving element 20 rests on bell 13 and restrains said bell 13 to said braking band 2 in axial direction A-A and in circumferential direction C-C;
- thus avoiding said braking band 2 from being restrained to said bell 13 in radial direction R-R.

**.** Those skilled in the art may make many changes and adaptations to the embodiments described above or can replace elements with others which are functionally equivalent in order to meet contingent needs without however departing from the scope of the appended claims.

**.** According to one embodiment, said band connecting element 39 and/or said bell connecting element 45 give elasticity to the connection between braking band 2 and bell 13, thus allowing the use or introduction of specific elastic elements to be avoided, with the exception of said driving element 20.

**.** According to one embodiment, said band connecting element 39 and/or said bell connecting element 45 give elasticity to the connection between braking band 2 and bell 13 due to circumferential and/or axial-radial grooves or channels which allow the braking band to be connected to the bell with a force connection which keeps a predefined elasticity.

### LIST OF REFERENCES

1 disc assembly of disc brake or disc assembly
2 braking band
3 opposite braking surfaces
4 opposite braking surfaces
5 radial inner braking band edge
6 radial band connecting extension or first radial band connecting extension
7 first bell resting surface
8 second bell resting surface arranged on the same plane as said first bell resting surface
9 first driving band surface
10 second driving band surface arranged on the same plane as said first driving band surface
11 third driving band surface opposite to said first driving band surface
12 fourth driving band surface arranged on the same plane as said third driving band surface
13 bell
14 axle-journal connecting elements
15 radial bell connecting extension or first radial bell connecting extension
16 first band resting surface
17 second band resting surface arranged on the same plane as said first band resting surface
18 first driving bell surface arranged on the same plane as said first driving band surface
19 second driving bell surface arranged on the same plane as said third driving band surface
20 driving element
21 first axial driving element resting surface for said band
22 further first axial resting surface arranged on the same plane as said first axial driving element resting surface
23 second axial driving element resting surface for said bell arranged opposite to said first axial driving element resting surface for said band
24 further second axial resting surface arranged on the same plane as said second axial driving element resting surface
25 first tangential driving bell surface
26 second tangential driving bell surface
27 first tangential driving band surface
28 second tangential driving band surface arranged on the same plane as said first tangential driving band surface
29 third tangential driving band surface arranged opposite to said first tangential driving band surface
30 fourth tangential driving band surface arranged on the same plane as said third tangential driving band surface
31 first opposite axial band surface
32 second opposite axial band surface arranged on the same plane as said first opposite axial band surface
33 first opposite axial bell surface
34 second opposite axial bell surface arranged on the same plane as said first opposite axial bell surface
35 radial driving element extension
36 bell edge
37 outer radial abutment bell seat
38 fastening tooth
39 band connecting element
40 second radial band connecting extension
41 third radial band connecting extension
42 fourth radial band connecting extension
43 circumferential band connecting element channel
44 radial axial band window
45 bell connecting element
46 second radial bell connecting extension
47 radial axial bell window
48 middle driving element body
49 driving element opening
50 driving element resting flanges
51 driving element resting flanges
52 driving element discharges
53 bell chamfers or slides
54 driving element chamfers or slides
55 radial outer braking band edge
56 inclined inner edge inner braking band joining surfaces
57 inclined outer edge outer braking band joining surface
58 band plates
59 band plates
60 ventilation channel
61 band plate connecting elements
62 braking band groove
63 groove module
64 second braking band groove
65 closed edge groove
66 straight groove stretch
67 inclined straight groove stretch
68 groove bottom
69 groove holes
70 circular-section ventilation channel opening
71 elliptical-section ventilation channel opening
72 radial outer edge recesses
A-A axial direction
R-R radial direction
T-T tangential direction
C-C circumferential direction
X-X disc assembly rotation axis

## Claims

1. A disc assembly (1) of disc brake adapted to cooperate with a brake caliper for exerting a braking action on a vehicle, said assembly being adapted to rotate about a rotation axis (X-X) coincident with or parallel to an axial direction (A-A), said assembly extending away from said rotation axis along radial directions (R-R) orthogonal to said axial direction (A-A) and along circumferential directions (C-C) orthogonal to said axial direction (A-A) and to said radial directions (R-R), and also locally defining tangential directions (T-T) precisely orthogonal to said axial direction (A-A) and orthogonal to the radial direction (R-R) passing through said point;
wherein said assembly comprises:
- a braking band (2);
- a bell (13) for connecting the disc assembly (1) to a support of a vehicle;
- at least one driving element (20);
wherein
- said bell (13) rests on at least one surface (33, 34) of the braking band (2), or a plurality of surfaces (33, 34) of the braking band (2) substantially coplanar with one another, thus avoiding a two-sided restraint at least between said bell and said braking band (2) ;
- said braking band (2) comprises at least one band driving surface (9; 10; 11; 12) extending along said axial (A-A) and radial (R-R) directions, thus forming a tangential abutment surface for the band (2);
- said at least one driving element (20) slidingly rests on said at least one band driving surface (9; 10; 11; 12);
**characterized in that**
- said bell (13) comprises at least one bell driving surface (18; 19) extending along said axial (A-A) and radial (R-R) directions, thus forming a tangential abutment surface for the bell (13);
- said at least one driving element (20) is selectively movable along said at least one band driving surface (9; 10; 11; 12), at least passing:
- from a position in which it avoids resting on the bell (13) - to a position in which it rests on the bell and restrains said bell (13) to said band in axial direction (A-A) and in circumferential direction (C-C);
- thus avoiding said braking band (2) from being restrained to said bell (13) in radial direction (R-R).

2. An assembly (1) according to claim 1, wherein
- said bell (13) comprises a bell edge (36) which forms an outer radial abutment bell seat (37) which prevents a movement in radial direction (R-R) away from the rotation axis (A-A);
- said at least one driving element (20) comprises at least one radial driving element extension (35);
- said radial driving element extension (35) comprises a fastening tooth (38) which is at least partially and removably inserted into said outer radial abutment bell seat (37).

3. An assembly (1) according to any one of the preceding claims, wherein
- said braking band (2) comprises opposite braking surfaces (3, 4) adapted to cooperate with brake pads to exert said braking action; and/or wherein
- said braking band comprises at least one radial band connecting extension (6) protruding substantially in radial direction (R-R) towards said rotation axis (X-X); and wherein
- said at least one radial band connecting extension (6) comprises at least one bell resting surface (7; 8) extending along said circumferential (C-C) and radial (R-R) directions, thus forming an axial abutment surface for a bell (13); and wherein
- said at least one radial band connecting extension (6) comprises at least one band driving surface (9; 10; 11; 12) extending along said axial (A-A) and radial (R-R) directions, thus forming a tangential abutment surface for the band (2); and wherein
- said at least one radial band connecting extension (6) comprises at least a first opposite axial band surface (31; 32) extending along said circumferential (C-C) and radial (R-R) directions, thus forming an axial abutment surface.

4. An assembly (1) according to any one of the preceding claims, wherein
said braking band (2) comprises a plurality of band connecting elements (39);
each band connecting element (39) comprises
- said radial band connecting extension or first radial band connecting extension (6),
- a second radial band connecting extension (40),
- a third radial band connecting extension (41),
- a fourth radial band connecting extension (42);
wherein
- said first, second, third and fourth radial band connecting extensions (6, 40, 41, 42) for each band connecting element (39) surround said driving element (20), thus creating two-sided restraints in tangential direction (T-T);
and/or wherein
each band connecting element (39) has four radial band connecting extensions (6, 40, 41, 42) opposed two-by-two and separated by a circumferential band connecting element channel (43) and a radial axial band window (44) adapted to slidingly accommodate said driving element (20);
and/or wherein
- said band connecting element (39) comprises a channel extending in radial (R-R) and axial (A-A) directions between radial band extension portions thereof, which allows said band connecting element (39), if stressed, to undergo an elastic deformation in tangential direction (T-T) of said band connecting element (39);
and/or wherein
- said band connecting element (39) comprises a channel extending in radial (R-R) and circumferential (C-C) directions between radial band extension portions thereof, which allows said band connecting element (39), if stressed, to undergo an elastic deformation in axial direction (A-A) of said band connecting element (39);
and/or wherein
- said mutually opposite first opposite axial band surface and first opposite axial bell surface (31, 33), second opposite axial band surface arranged on the same plane as said first opposite axial band surface and second opposite axial bell surface arranged on the same plane as said first opposite axial bell surface (32, 34) are present on radial band connecting extension portions (6, 40, 41, 42) which are separated from one another by at least one channel which allows the elastic deformation of the band connecting element (39), thus allowing a preloaded coupling to the driving element (20), thus obtaining the benefits of the seal effect in case of vibrations of the disc, which reduces knocks and noises and ensures constant sealing and friction on sliding surfaces between driving element (20) and braking band (2) and bell (13), thus ensuring an expansion of the band always under the optimal conditions set forth in the project.

5. An assembly (1) according to any one of the preceding claims, wherein
said bell (13) comprises a plurality of bell connecting elements (45);
each bell connecting element (45) comprises
- said radial bell connecting extension or first radial bell connecting extension (15),
- a second radial bell connecting extension (46);
wherein
- said first and second radial bell connecting extensions (15, 46) for each bell connecting element (45) surround said driving element (20), thus creating two-sided restraints in tangential direction (T-T);
and/or wherein
each bell connecting element (45) has two opposed radial bell connecting extensions (15, 46) separated by a radial axial bell window (47) adapted to slidingly accommodate said driving element (20) .

6. An assembly (1) according to any one of the preceding claims, wherein
- said braking band comprises at least one radial band connecting extension (6) protruding substantially in radial direction (R-R) towards said rotation axis (X-X);
- said at least one radial band connecting extension (6) comprises at least one bell resting surface (7; 8) extending along said circumferential (C-C) and radial (R-R) directions, thus forming an axial abutment surface for a bell (13);
- said at least one radial band connecting extension (6) comprises at least one driving band surface (9; 10; 11; 12) extending along said axial (A-A) and radial (R-R) directions, thus forming a tangential abutment surface for the band (2);
- said at least one radial band connecting extension (6) comprises at least a first opposite axial band surface (31; 32) extending along said circumferential (C-C) and radial (R-R) directions, thus forming an axial abutment surface.

7. An assembly (1) according to any one of the preceding claims, wherein
- said at least one bell resting surface (7; 8) consists of two bell resting surfaces (7 and 8) and
- said two bell resting surfaces (7; 8) are coplanar and facing the same side as the braking band (2); and
- said two bell resting surfaces (7 and 8) are formed on two adjacent but separate radial band connecting extensions (6, 40); and/or wherein
- said at least one driving band surface (9; 10; 11; 12) consists of four driving band surfaces (9 and 10 and 11 and 12);
- said four driving band surfaces (9 and 10 and 11 and 12) are coplanar two-by-two (9, 10) and (11, 12) and opposite two-by-two (9, 11) and (10, 12), thus forming resting and sliding guides for said driving element (20);
- said four driving band surfaces (9 and 10 and 11 and 12) are formed in four adjacent but separate radial band connecting extensions (6, 40, 41, 42).

8. An assembly (1) according to any one of the preceding claims, wherein
- said bell (13) comprises at least one radial bell connecting extension (15) protruding substantially in radial direction (R-R) away from said rotation axis (A-A);
- said at least one radial bell connecting extension (15) comprises at least one band resting surface (16; 17) extending along said circumferential (C-C) and radial (R-R) directions, thus forming an axial abutment surface for said braking band (2);
- said at least one radial bell connecting extension (15) comprises at least one driving bell surface (18; 19) extending along said axial (A-A) and radial (R-R) directions, thus forming a tangential abutment surface for the bell (13);
- said at least one radial bell connecting extension (15) comprises at least a first opposite axial bell surface (33; 34) extending along said circumferential (C-C) and radial (R-R) directions, thus forming an axial abutment surface.

9. An assembly (1) according to any one of the preceding claims, wherein
- said at least one driving bell surface (18; 19) consists of two driving bell surfaces (18 and 19), which are mutually opposed to form a two-sided guide for said driving element (20);
- said two driving bell surfaces (18 and 19) are formed in two separate radial band connecting extensions (15, 46).

10. An assembly (1) according to any one of the preceding claims, wherein
- said driving element (20) is a single body and made in a single piece;
and/or wherein
- said driving element (20) comprises a middle driving element body (48) adapted to rest against said braking band (2) and said bell (13) in tangential direction (T-T);
and/or wherein
- said middle driving element body (48) comprises a driving element opening (49) which allows said driving element (20), if stressed, to undergo an elastic deformation in tangential direction (T-T) of said driving element (20) thus obtaining the benefits of the seal effect in case of vibrations of the disc, which reduces knocks and noises and ensures constant sealing and friction on sliding surfaces between driving element (20) and braking band (2) and bell (13), thus ensuring an expansion of the band always under the optimal conditions set forth in the project;
and/or wherein
- said driving element (20) comprises two opposite resting flanges (50, 51) for resting and preloading in axial direction (A-A) the driving element on the braking band (2) on one side, and on the bell (13,) on the other side;
and/or wherein
- each of said resting flanges (50, 51) connects to a middle driving element body (48) by means of driving element discharges (52) adapted to avoid the notching effect and contact with braking band (2) and bell (13).

11. An assembly (1) according to any one of the preceding claims, wherein
- the tangential driving between said braking band (2) and said bell (13) only occurs by means of said driving element (20), thus avoiding a direct contact in tangential (T-T) or circumferential (CC) direction between said braking band (2) and said bell (13).

12. An assembly (1) according to any one of the preceding claims, wherein
- said radial band connecting extension or first radial band connecting extension (6) and said opposite second radial band connecting extension (40), and said radial bell connecting extension or first radial bell connecting extension (15) and said second radial bell connecting extension (46) and/or said third radial band connecting extension (41) and said opposite fourth radial band connecting extension (42),
allow to guide said braking band (2) in both forward and reverse directions of the vehicle.

13. An assembly (1) according to any one of the preceding claims, wherein
- said braking band (2) is made of a different material from the material of said bell (13);
wherein
- said braking band (2) is made of cast iron;
or wherein
- said braking band (2) is made of titanium;
or wherein
- said braking band (2) is made of a titanium alloy;
and/or wherein
- said bell (13) is made of aluminum;
or wherein
- said bell (13) is made of steel;
or wherein
- said driving element (20) is made of steel;
or wherein
- said driving element (20) is made of titanium.

14. An assembly (1) according to any one of the preceding claims, wherein
- said bell connecting element (45) comprises bell chamfers or slides (53) adapted to allow the movement of said driving element (20) so that the driving element may rest on said bell connecting element (45) and restrain said braking band (2) to said bell (13);
and/or wherein
- said bell chambers or slides (53) are within said at least one radial bell connecting extension (15; 46) to allow the forced sliding of the driving element (20) and the sandwich tightening of the bell (13) against the braking band (2);
and/or wherein
- said driving element (20) comprises driving element chamfers or slides (54) adapted to allow the movement/sliding of said driving element (20) so that the driving element may slide and rest on said bell connecting element (45) and restrain said braking band (2) to said bell (13).

15. An assembly (1) according to any one of the preceding claims, wherein
- said braking band (2) comprises opposite braking surfaces (3, 4) and a radial inner braking band edge (5) and a radial outer braking band edge (55);
and wherein
- said braking band (2) comprises at least one inclined inner braking band surface (56) joining at least one of said braking surfaces (3, 4) and said radial inner braking band edge (5);
and/or wherein
- said braking band (2) comprises at least one inclined outer braking band surface (57) joining at least one of said braking surfaces (3, 4) and said radial outer braking band edge (55);
and/or wherein
at least one inclined inner braking band surface (56) joining at least one of said braking surfaces (3, 4) and said radial inner braking band edge (5) is provided between two adjacent band connecting elements (39) associated with two adjacent bell connecting elements (45), thus creating broad windows between bell (13) and braking band (2).

16. An assembly (1) according to any one of the preceding claims, wherein
- said braking band (2) comprises two band plates (58, 59) separated by at least one ventilation channel (60) and connected by band plate connecting elements (61) [for example, fins or pegs] which delimit said at least one ventilation channel (60),
- said ventilation channel (60) leads into said radial outer braking band edge (55) with at least one circular-section opening (70); and/or wherein
- said ventilation channel (60) leads into said radial outer braking band edge (55) with at least one elliptical-section opening (71).

17. An assembly (1) according to any one of the preceding claims, wherein
- said braking band (2) comprises opposite braking surfaces (3, 4);
and/or wherein
- at least one of said braking surfaces (3, 4) comprises at least one braking band groove (62) or first braking band groove;
or wherein
at least one of said braking surfaces (3, 4) comprises at least one braking band groove (62) or first braking band groove, and wherein
- said at least one braking band groove (62) consists of two grooves (64) to form a groove module (63);
wherein
- said first and second braking band grooves (62, 64) of each module (63) are symmetric and mirror-like with respect to an axis having radial direction (R-R);
and/or wherein
- said at least one groove module (63) is a plurality of groove modules (63) distributed equally spaced apart circumferentially on said braking band (2);
or wherein
at least one of said braking surfaces (3, 4) comprises at least one braking band groove (62) or first braking band groove, and wherein
- each of said grooves (62, 64) is a groove with edge forming a closed perimeter, or closed edge groove (65), thus avoiding grooves which lead outwards from said braking surfaces (3, 4) or wherein
at least one of said braking surfaces (3, 4) comprises at least one braking band groove (62) or first braking band groove, and wherein
- each of said grooves (62, 64) comprises a straight groove stretch (66) extending in a substantially straight manner and
arranged almost parallel to a radial direction (R-R); and
- each of said grooves (62, 64) comprises an inclined straight groove stretch (67) extending in a substantially straight manner and arranged inclined with respect to said straight groove stretch (66) and is open and joined with said straight groove stretch (66);
wherein
- the theoretical straight extension of said straight groove stretch (66) extending in a substantially straight manner and arranged almost parallel to a radial direction (R-R) is arranged adjacent to the sides of said at least one radial band connecting extension (6);
or wherein
at least one of said braking surfaces (3, 4) comprises at least one braking band groove (62) or first braking band groove, and wherein
- each of said grooves (62, 64) comprises a groove bottom (68) and wherein a plurality of groove holes (69) is within said groove bottom (68);
and/or wherein
- said plurality of groove holes (69) puts said ventilation channel (60) into fluid communication with said braking surfaces (3, 4).

18. A method for connecting a braking band (2) to a bell (13), wherein there are provided the steps of:
- providing an assembly (1) as described in any one of the preceding claims;
- resting said driving element (20) on said braking band (2) in a position which allows to freely couple said bell (13) to the braking band (2);
- resting said bell (13) on said braking band (2);
- moving said driving element (20) by passing:
- from a position in which said driving element (20) avoids resting on the bell (13);
- to a position in which said driving element (20) rests on the bell (13) and restrains said bell (13) to said braking band (2) in axial direction (A-A) and in circumferential direction (C-C); - thus avoiding said braking band (2) from being restrained to said bell (13) in radial direction (R-R).

## Patentansprüche

1. Scheibenanordnung (1) einer Scheibenbremse, welche dazu eingerichtet ist, mit einem Bremssattel zusammenzuwirken, um eine Bremswirkung auf ein Fahrzeug auszuüben, wobei die Anordnung dazu eingerichtet ist, um eine Rotationsachse (X-X) zu rotieren, welche mit einer axialen Richtung (A-A) zusammenfällt oder parallel zu dieser ist, wobei sich die Anordnung von der Rotationsachse weg entlang radialer Richtungen (R-R) orthogonal zu der axialen Richtung (A-A) und entlang von Umfangsrichtungen (C-C) orthogonal zu der axialen Richtung (A-A) und zu den radialen Richtungen (R-R) erstreckt, und ebenfalls lokal tangentiale Richtungen (T-T) genau orthogonal zu der axialen Richtung (A-A) und orthogonal zu der radialen Richtung (R-R) definiert, welche durch die Stelle verläuft;
wobei die Anordnung umfasst:
- ein Bremsband (2);
- eine Glocke (13) zum Verbinden der Scheibenanordnung (1) mit einer Halterung eines Fahrzeugs;
- wenigstens ein Antriebselement (20);
wobei
- die Glocke (13) an wenigstens einer Fläche (33, 34) des Bremsbandes (2) oder einer Mehrzahl von Flächen (33, 34) des Bremsbandes (2) aufliegt, welche im Wesentlichen koplanar zueinander sind, wodurch eine zweiseitige Zwangsverbindung wenigstens zwischen der Glocke und dem Bremsband (2) verhindert ist;
- wobei das Bremsband (2) wenigstens eine Band-Antriebsfläche (9; 10; 11; 12) umfasst, welche sich entlang der axialen (A-A) und der radialen (R-R) Richtungen erstreckt, wodurch eine tangentiale Anlagefläche für das Band (2) gebildet ist;
- wobei das wenigstens eine Antriebselement (20) gleitbar auf der wenigstens einen Band-Antriebsfläche (9; 10; 11; 12) aufliegt;
**dadurch gekennzeichnet, dass**
- die Glocke (13) wenigstens eine Glocke-Antriebsfläche (18; 19) umfasst, welche sich entlang der axialen (A-A) und der radialen (R-R) Richtungen erstreckt, wodurch eine tangentiale Anlagefläche für die Glocke (13) gebildet ist;
- wobei das wenigstens eine Antriebselement (20) entlang der wenigstens einen Band-Antriebsfläche (9; 10; 11; 12) wahlweise bewegbar ist, wenigstens durchlaufend:
- von einer Position, in welcher es ein Aufliegen an der Glocke (13) verhindert - zu einer Position, in welcher es an der Glocke aufliegt und die Glocke (13) in axialer Richtung (A-A) und in Umfangsrichtung (C-C) mit dem Band in Zwangsverbindung bringt;
- wodurch verhindert ist, dass das Bremsband (2) in radialer Richtung (R-R) mit der Glocke (13) in Zwangsverbindung gebracht ist.

2. Anordnung (1) nach Anspruch 1, wobei
- die Glocke (13) einen Glockenrand (36) umfasst, welcher einen äußeren radialen Glockenanlagesitz (37) bildet, welcher eine Bewegung in radialer Richtung (R-R) weg von der Rotationsachse (A-A) verhindert;
- wobei das wenigstens eine Antriebselement (20) wenigstens einen radialen Antriebselement-Fortsatz (35) umfasst;
- wobei der radiale Antriebselement-Fortsatz (35) einen Befestigungszahn (38) umfasst, welcher wenigstens teilweise und lösbar in den äußeren radialen Glockenanlagesitz (37) eingesetzt ist.

3. Anordnung (1) nach einem der vorhergehenden Ansprüche, wobei
- das Bremsband (2) entgegengesetzte Bremsflächen (3, 4) umfasst, welche dazu eingerichtet sind, mit Bremsbelägen zusammenzuwirken, um die Bremswirkung auszuüben;
und/oder wobei
- das Bremsband wenigstens einen radialen Bandverbindungsfortsatz (6) umfasst, welcher im Wesentlichen in einer radialen Richtung (R-R) in Richtung der Rotationsachse (X-X) vorsteht; und wobei
- der wenigstens eine radiale Bandverbindungsfortsatz (6) wenigstens eine Glockenanlagefläche (7; 8) umfasst, welche sich entlang der Umfangs- (C-C) und der radialen (R-R) Richtungen erstreckt, wodurch eine axiale Anlagefläche für eine Glocke (13) gebildet ist; und wobei
- der wenigstens eine radiale Bandverbindungsfortsatz (6) wenigstens eine Band-Antriebsfläche (9; 10; 11; 12) umfasst, welche sich entlang den axialen (A-A) und radialen (R-R) Richtungen erstreckt, wodurch eine tangentiale Anlagefläche für das Band (2) gebildet ist; und wobei
- der wenigstens eine radiale Bandverbindungsfortsatz (6) wenigstens eine erste entgegengesetzte axiale Bandfläche (31; 32) umfasst, welche sich entlang der Umfangs- (C-C) und der radialen (R-R) Richtungen erstreckt, wodurch eine axiale Anlagefläche gebildet ist.

4. Anordnung (1) nach einem der vorhergehenden Ansprüche, wobei
das Bremsband (2) eine Mehrzahl von Bandverbindungselementen (39) umfasst;
jedes Bandverbindungselement (39) umfasst:
- den radialen Bandverbindungsfortsatz oder den ersten radialen Bandverbindungsfortsatz (6),
- einen zweiten radialen Bandverbindungsfortsatz (40),
- einen dritten radialen Bandverbindungsfortsatz (41),
- einen vierten radialen Bandverbindungsfortsatz (42);
wobei
- der erste, der zweite, der dritte und der vierte radiale Bandverbindungsfortsatz (6, 40, 41, 42) für jedes Bandverbindungselement (39) das Antriebselement (20) umgeben, wodurch sie zweiseitige Zwangsverbindungen in tangentialer Richtung (T-T) erzeugen;
und/oder wobei
jedes Bandverbindungselement (39) vier radiale Bandverbindungsfortsätze (6, 40, 41, 42) aufweist, welche zwei-zu-zwei entgegengesetzt sind und durch einen Umfang-Bandverbindungselement-Kanal (43) und ein radiales Axialbandfester (44) getrennt sind, welches dazu eingerichtet ist, das Antriebselement (20) gleitbar aufzunehmen;
und/oder wobei
- das Bandverbindungselement (39) einen Kanal umfasst, welcher sich in radialen (R-R) und axialen (A-A) Richtungen zwischen radialen Bandfortsatzabschnitten davon erstreckt, was dem Bandverbindungselement (39) erlaubt, wenn beansprucht, einer elastischen Verformung in tangentialer Richtung (T-T) des Bandverbindungselements (39) unterzogen zu werden;
und/oder wobei
- das Bandverbindungselement (39) einen Kanal umfasst, welcher sich in radialen (R-R) und Umfangs-(C-C) Richtungen zwischen radialen Bandfortsatzabschnitten davon erstreckt, was dem Bandverbindungselement (39) erlaubt, wenn beansprucht, einer elastischen Verformung in axialer Richtung (A-A) des Bandverbindungselements (39) unterzogen zu werden;
und/oder wobei
- die erste entgegengesetzte axiale Bandfläche und die erste entgegengesetzte axiale Glockenfläche (31, 33), welche einander entgegensetzt sind, eine zweite entgegengesetzte axiale Bandfläche, welche an der gleichen Ebene wie die erste entgegengesetzte axiale Bandfläche angeordnet ist, und eine zweite entgegengesetzte axiale Glockenfläche, welche an der gleichen Ebene wie die erste entgegengesetzte axiale Glockenfläche (32, 34) angeordnet ist, an radialen Bandverbindungsfortsatzabschnitten (6, 40, 41, 42) vorhanden sind, welche durch wenigstens einen Kanal voneinander getrennt sind, welcher die elastische Deformation des Bandverbindungselements (39) erlaubt, wodurch eine vorbelastete Kopplung mit dem Antriebselement (20) erlaubt ist, wodurch die Vorteile der Abdichtungswirkung in einem Fall von Vibrationen der Scheibe erhalten werden, was Schläge und Geräusche reduziert und eine konstante Abdichtung an Gleitflächen zwischen dem Antriebselement (20) und dem Bremsband (2) und der Glocke (13) sicherstellt, wodurch eine Ausdehnung des Bandes immer unter den optimalen Bedingungen sichergestellt ist, welche in dem Projekt dargelegt sind.

5. Anordnung (1) nach einem der vorhergehenden Ansprüche,
wobei
die Glocke (13) eine Mehrzahl von Glockenverbindungselementen (45) umfasst;
jedes Glockenverbindungselement (45) umfasst:
- den radialen Glockenverbindungsfortsatz oder den ersten radialen Glockenverbindungsfortsatz (15),
- einen zweiten radialen Glockenverbindungsfortsatz (46);
wobei
- der erste und der zweite radiale Glockenverbindungsfortsatz (15, 46) für jedes Glockenverbindungselement (45) das Antriebselement (20) umgeben, wodurch sie zweiseitige Zwangsverbindungen in tangentialer Richtung (T-T) erzeugen;
und/oder wobei
jedes Glockenverbindungselement (45) zwei entgegengesetzte radiale Glockenverbindungsfortsätze (15, 46) aufweist, welche durch ein radiales Axialglockenfenster (47) getrennt sind, welches dazu eingerichtet ist, das Antriebselement (20) gleitbar aufzunehmen.

6. Anordnung (1) nach einem der vorhergehenden Ansprüche, wobei
- das Bremsband wenigstens einen radialen Bandverbindungsfortsatz (6) umfasst, welcher im Wesentlichen in radialer Richtung (R-R) in Richtung der Rotationsachse (X-X) vorsteht;
- der wenigstens eine radiale Bandverbindungsfortsatz (6) wenigstens eine Glockenauflagefläche (7; 8) umfasst, welche sich entlang der Umfangs- (C-C) und der radialen (R-R) Richtungen erstreckt, wodurch eine axiale Anlagefläche für eine Glocke (13) gebildet ist;
- der wenigstens eine radiale Bandverbindungsfortsatz (6) wenigstens eine Antriebsbandfläche (9; 10; 11; 12) umfasst, welche sich entlang der axialen (A-A) und der radialen (R-R) Richtungen erstreckt, wodurch eine tangentiale Anlagefläche für das Band (2) gebildet ist;
- der wenigstens eine radiale Bandverbindungsfortsatz (6) wenigstens eine erste entgegengesetzte axiale Bandfläche (31; 32) umfasst, welche sich entlang der Umfangs- (C-C) und der radialen (R-R) Richtungen erstreckt, wodurch eine axiale Anlagefläche gebildet ist.

7. Anordnung (1) nach einem der vorhergehenden Ansprüche, wobei
- die wenigstens eine Glockenauflagefläche (7; 8) aus zwei Glockenauflageflächen (7 und 8) gebildet ist und
- die beiden Glockenauflageflächen (7; 8) koplanar sind und der gleichen Seite zugewandt sind, wie das Bremsband (2); und
- die beiden Glockenauflageflächen (7 und 8) an zwei benachbarten, jedoch separaten Bandverbindungsfortsätzen (6, 40) gebildet sind; und/oder wobei
- die wenigstens eine Antriebsbandfläche (9; 10; 11; 12) aus vier Antriebsbandflächen (9 und 10 und 11 und 12) gebildet ist;
- die vier Antriebsbandflächen (9 und 10 und 11 und 12) zwei-zu-zwei (9, 10) und (11, 12) entgegengesetzt zwei-zu-zwei (9, 11) und (10, 12) koplanar sind, wodurch Auflage- und Gleit-Führungen für das Antriebselement gebildet sind;
- die vier Antriebsbandflächen (9 und 10 und 11 und 12) in vier benachbarten, jedoch separaten radialen Bandverbindungsfortsätzen (6, 40, 41, 42) gebildet sind.

8. Anordnung (1) nach einem der vorhergehenden Ansprüche, wobei
- die Glocke (13) wenigstens einen radialen Glockenverbindungsfortsatz (15) umfasst, welcher im Wesentlichen in einer radialen Richtung (R-R) von der Rotationsachse (A-A) weg vorsteht;
- der wenigstens eine radiale Glockenverbindungsfortsatz (15) wenigstens eine Bandauflagefläche (16; 17) umfasst, welche sich entlang den Umfangs- (C-C) und den radialen (R-R) Richtungen erstreckt, wodurch eine axiale Anlagefläche für das Bremsband (2) gebildet ist;
- der wenigstens eine radiale Glockenverbindungsfortsatz (15) wenigstens eine Antriebsglockenfläche (18; 19) umfasst, welche sich entlang der axialen (A-A) und der radialen (R-R) Richtungen erstreckt, wodurch eine tangentiale Anlagefläche für die Glocke (13) gebildet ist;
- der wenigstens eine radiale Glockenverbindungsfortsatz (15) wenigstens eine erste entgegengesetzte axiale Glockenfläche (33; 34) umfasst, welche sich entlang der Umfangs- (C-C) und der radialen (R-R) Richtungen erstreckt, wodurch eine axiale Anlagefläche gebildet ist.

9. Anordnung (1) nach einem der vorhergehenden Ansprüche, wobei
- die wenigstens eine Antriebsglockenfläche (18; 19) aus zwei Antriebsglockenflächen (18 und 19) gebildet sind, welche einander gegenüberliegen, um eine zweiseitige Führung für das Antriebselement (20) zu bilden;
- wobei die beiden Antriebsglockenflächen (18 und 19) in zwei separaten radialen Bandverbindungsfortsätzen (15, 46) gebildet sind.

10. Anordnung (1) nach einem der vorhergehenden Ansprüche, wobei
- das Antriebselement (20) ein einzelner Körper ist und in einem einzelnen Stück ausgebildet ist;
und/oder wobei
- das Antriebselement (20) einen mittleren Antriebselementkörper (48) umfasst, welcher dazu eingerichtet ist, gegen das Bremsband (2) und die Glocke (13) in tangentialer Richtung (T-T) aufzuliegen;
und/oder wobei
- der mittlere Antriebselementkörper (48) eine Antriebselementöffnung (49) umfasst, welche dem Antriebselement (20) erlaubt, wenn beansprucht, einer elastischen Verformung in tangentialer Richtung (T-T) des Antriebselements (20) unterzogen zu werden, wodurch die Vorteile der Abdichtungswirkung in einem Fall von Vibrationen der Scheibe erhalten werden, was Schläge und Geräusche reduziert und eine konstante Abdichtung und eine konstante Reibung an Gleitflächen zwischen dem Antriebselement (20) und dem Bremsband (2) und der Glocke (13) sicherstellt, wodurch eine Ausdehnung des Bandes immer unter den optimalen Bedingungen sichergestellt ist, welche in dem Projekt dargelegt sind;
und/oder wobei
- das Antriebselement (20) zwei entgegengesetzte Auflageflansche (50, 51) zum Aufliegen und Vorbelasten des Antriebselements in axialer Richtung (A-A) an dem Bremsband (2) an einer Seite und an der Glocke (13) an der anderen Seite umfasst;
und/oder wobei
- jeder der Auflageflansche (50, 51) mittels Antriebselement-Entlastungseinrichtungen (52), welche dazu eingerichtet sind, die Kerbwirkung zu unterbinden und das Bremsband (2) und die Glocke (13) zu kontaktieren, mit einem mittleren Antriebselementkörper (48) verbindet.

11. Anordnung (1) nach einem der vorhergehenden Ansprüche, wobei
- das tangentiale Antreiben zwischen dem Bremsband (2) und der Glocke (13) nur mittels des Antriebselements (20) auftritt, wodurch ein direkter Kontakt in der tangentialen (T-T) oder der Umfangs- (C-C) Richtung zwischen dem Bremsband (2) und der Glocke (13) unterbunden ist.

12. Anordnung (1) nach einem der vorhergehenden Ansprüche, wobei
- der radiale Bandverbindungsfortsatz oder der erste radiale Bandverbindungsfortsatz (6) und der entgegengesetzte zweite radiale Bandverbindungsfortsatz (40), und der radiale Glockenverbindungsfortsatz oder der erste radiale Glockenverbindungsfortsatz (15) und der zweite radiale Glockenverbindungsfortsatz (46) und/oder der dritte radiale Bandverbindungsfortsatz (41) und der entgegengesetzte vierte radiale Bandverbindungsfortsatz (42) erlauben, das Bremsband (2) sowohl in Vorwärts- als auch in RückwärtsRichtung des Fahrzeugs zu führen.

13. Anordnung (1) nach einem der vorhergehenden Ansprüche,
wobei
- das Bremsband (2) aus einem von dem Material der Glocke (13) verschiedenen Material hergestellt ist;
wobei
- das Bremsband (2) aus Gusseisen hergestellt ist;
oder wobei
- das Bremsband (2) aus Titan hergestellt ist;
oder wobei
- das Bremsband (2) aus einer Titan-Legierung hergestellt ist;
und/oder wobei
- die Glocke (13) aus Aluminium hergestellt ist;
oder wobei
- die Glocke (13) aus Stahl hergestellt ist;
oder wobei
das Antriebselement (20) aus Stahl hergestellt ist;
oder wobei
das Antriebselement (20) aus Titan hergestellt ist.

14. Anordnung (1) nach einem der vorhergehenden Ansprüche, wobei
- das Glockenverbindungselement (45) Glocken-Abschrägungen oder - Gleiteinrichtungen (53) umfasst, welche dazu eingerichtet sind, die Bewegung des Antriebselements (20) zu erlauben, so dass das Antriebselement auf dem Glockenverbindungselement (45) aufliegen und das Bremsband (2) mit der Glocke (13) in Zwangsverbindung bringen kann;
und/oder wobei
- die Glocken-Kammern oder -Gleiteinrichtungen (53) innerhalb des wenigstens einen radialen Glockenverbindungsfortsatzes (15; 46) sind, um das erzwungene Gleiten des Antriebselements (20) und das sandwichartige Befestigen der Glocke (13) gegen das Bremsband (2) zu erlauben;
und/oder wobei
- das Antriebselements (20) Antriebselement-Abschrägungen oder - Gleiteinrichtungen (54) umfasst, welche dazu eingerichtet sind, die Bewegung/das Gleiten des Antriebselements (20) zu erlauben, so dass das Antriebselement an dem Glockenverbindungselement (45) gleiten und an diesem aufliegen und das Bremsband (2) mit der Glocke (13) in Zwangsverbindung bringen kann.

15. Anordnung (1) nach einem der vorhergehenden Ansprüche,
wobei
- das Bremsband (2) entgegengesetzte Bremsflächen (3, 4) und einen radial inneren Bremsbandrand (5) und einen radial äußeren Bremsbandrand (55) umfasst;
und wobei
- das Bremsband (2) wenigstens eine geneigte innere Bremsbandfläche (56) umfasst, welche wenigstens eines aus den Bremsflächen (3, 4) und dem radial inneren Bremsbandrand (5) verbindet;
und/oder wobei
- das Bremsband (2) wenigstens eine geneigte äußere Bremsbandfläche (57) umfasst, welche wenigstens eines aus den Bremsflächen (3, 4) und dem radial äußeren Bremsbandrand (55) verbindet;
und/oder wobei
wenigstens eine geneigte innere Bremsbandfläche (56), welche wenigstens eines aus den Bremsflächen (3, 4) und dem radial inneren Bremsbandrand (5) verbindet, zwischen zwei benachbarten Bandverbindungselementen (39) bereitgestellt ist, welche den beiden benachbarten Glockenverbindungselementen (45) zugeordnet sind, wodurch breite Fenster zwischen der Glocke (13) und dem Bremsband (2) gebildet sind.

16. Anordnung (1) nach einem der vorhergehenden Ansprüche, wobei
- das Bremsband (2) zwei Bandplatten (58, 59) umfasst, welche durch wenigstens einen Belüftungskanal (60) getrennt sind und durch Bandplattenverbindungselemente (61) [beispielsweise Rippen oder Stifte] verbunden sind, welche den wenigstens einen Belüftungskanal (60) begrenzen,
- der Belüftungskanal (60) in den radial äußeren Bremsbandrand (55) mit wenigstens einer Öffnung (70) mit einem kreisförmigen Querschnitt führt; und/oder wobei
- der Belüftungskanal (60) in den radial äußeren Bremsbandrand (55) mit wenigstens einer Öffnung (71) mit einem elliptischen Querschnitt führt.

17. Anordnung (1) nach einem der vorhergehenden Ansprüche, wobei
- das Bremsband (2) entgegengesetzte Bremsflächen (3, 4) umfasst; und/oder wobei
- wenigstens eine aus den Bremsflächen (3, 4) wenigstens eine Bremsbandnut (62) oder eine erste Bremsbandnut umfasst;
oder wobei
wenigstens eine der Bremsflächen (3, 4) wenigstens eine Bremsbandnut (62) oder eine erste Bremsbandnut umfasst, und wobei
- die wenigstens eine Bremsbandnut (62) aus zwei Nuten (64) gebildet ist, um ein Nut-Modul (63) zu bilden;
wobei
- die erste und die zweite Bremsbandnut (62, 64) jedes Moduls (63) symmetrisch und spiegelähnlich in Bezug auf eine Achse sind, welche eine radiale Richtung (R-R) aufweist;
und/oder wobei
das wenigstens eine Nut-Modul (63) eine Mehrzahl von Nut-Modulen (63) ist, welche gleichmäßig voneinander beabstandet in Umfangsrichtung an dem Bremsband (2) verteilt sind;
oder wobei
wenigstens eine der Bremsflächen (3, 4) wenigstens eine Bremsbandnut (62) oder eine erste Bremsbandnut umfasst, und wobei
- jede der Nuten (62, 64) eine Nut mit einem Rand, welcher einen geschlossenen Umfang bildet, oder eine Nut (65) mit geschlossenen Rand ist, wodurch Nuten vermieden sind, welche von den Bremsflächen (3, 4) nach außen führen,
oder wobei
wenigstens eine der Bremsflächen (3, 4) wenigstens eine Bremsbandnut (62) oder eine erste Bremsbandnut umfasst, und wobei
- jede der Nuten (62, 64) eine gerade Nutenstrecke (66) umfasst, welche sich in einer sich in einer im Wesentlichen geraden Weise erstreckt und annähernd parallel zu einer radialen Richtung (R-R) angeordnet ist; und
- jede der Nuten (62, 64) wenigstens eine geneigte gerade Nutenstrecke (67) umfasst, welche sich in einer im Wesentlichen geraden Weise erstreckt und in Bezug auf die gerade Nutenstrecke (66) geneigt angeordnet ist und offen ist und mit der geraden Nutenstrecke (66) verbunden ist;
wobei
- die theoretische gerade Erstreckung der geraden Nutenstrecke (66), welche sich in einer im Wesentlichen geraden Weise erstreckt und annähernd parallel zu einer radialen Richtung (R-R) ist, den Seiten des wenigstens einen radialen Bandverbindungsfortsatzes (6) benachbart angeordnet ist;
oder wobei
wenigstens eine der Bremsflächen (3, 4) wenigstens eine Bremsbandnut (62) oder eine erste Bremsbandnut umfasst, und wobei
- jede der Nuten (62, 64) einen Nutenboden (68) umfasst und wobei eine Mehrzahl von Nutenlöchern (69) innerhalb den Nutenbodens (68) ist; und/oder wobei
- die Mehrzahl von Nutenlöchern (69) den Belüftungskanal (60) in Fluidkommunikation mit den Bremsflächen (3, 4) versetzt.

18. Verfahren zum Verbinden eines Bremsbandes (2) mit einer Glocke (13), wobei die folgenden Schritte bereitgestellt sind:
- Bereitstellen einer Anordnung (1) wie in einem der vorhergehenden Ansprüche beschrieben;
- Aufliegen des Antriebselements (20) an dem Bremsband (2) in einer Position, welche erlaubt, die Glocke (13) frei mit dem Bremsband (2) zu koppeln;
- Aufliegen der Glocke (13) an dem Bremsband (2);
- Bewegen des Antriebselements (20), indem Folgendes durchlaufen wird:
- von einer Position, in welcher das Antriebselement (20) ein Aufliegen auf der Glocke (13) vermeidet;
- zu einer Position, in welcher das Antriebselement (20) auf der Glocke (13) aufliegt und die Glocke (13) in axialer Richtung (A-A) und in Umfangsrichtung (C-C) in Zwangsverbindung mit dem Bremsband (2) bringt; - wodurch verhindert wird, dass das Bremsband (2) in radialer Richtung (R-R) mit der Glocke (13) in Zwangsverbindung gebracht wird.

## Revendications

1. Ensemble disque (1) de frein à disque adapté pour coopérer avec un étrier de frein pour exercer une action de freinage sur un véhicule, ledit ensemble étant adapté pour tourner autour d'un axe de rotation (X-X) coïncidant avec ou parallèle à une direction axiale (A-A), ledit ensemble s'étendant en s'écartant dudit axe de rotation dans des directions radiales (R-R) orthogonales à ladite direction axiale (A-A) et dans des directions circonférentielles (C-C) orthogonales à ladite direction axiale (A-A) et auxdites directions radiales (R-R), et définissant également localement des directions tangentielles (T-T) précisément orthogonales à ladite direction axiale (A-A) et orthogonales à la direction radiale (R-R) passant par ledit point ;
dans lequel ledit ensemble comprend :
- une bande de freinage (2) ;
- une cloche (13) permettant de relier l'ensemble disque (1) à un support d'un véhicule ;
- au moins un élément d'entraînement (20) ;
dans lequel
- ladite cloche (13) appuie sur au moins une surface (33, 34) de la bande de freinage (2), ou sur une pluralité de surfaces (33, 34) de la bande de freinage (2) qui sont sensiblement dans le même plan, évitant ainsi une contrainte bilatérale au moins entre ladite cloche et ladite bande de freinage (2) ;
- ladite bande de freinage (2) comprend au moins une surface d'entraînement de bande (9 ; 10 ; 11 ; 12) s'étendant dans ladite direction axiale (A-A) et dans ladite direction radiale (R-R), formant ainsi une surface de butée tangentielle pour la bande (2) ;
- ledit élément d'entraînement (20), au moins au nombre de un, appuie en coulissant sur ladite surface d'entraînement de bande (9 ; 10 ; 11 ; 12), au moins au nombre de une ;
**caractérisé en ce que**
- ladite cloche (13) comprend au moins une surface d'entraînement de cloche (18 ; 19) s'étendant dans ladite direction axiale (A-A) et dans ladite direction radiale (R-R), formant ainsi une surface de butée tangentielle pour la cloche (13) ;
- ledit élément d'entraînement (20), au moins au nombre de un, est sélectivement mobile le long de ladite surface d'entraînement de bande (9 ; 10 ; 11 ; 12), au moins au nombre de une, au moins en passant :
- d'une position dans laquelle il évite d'appuyer sur la cloche (13) à une position dans laquelle il appuie sur la cloche et contraint ladite cloche (13) sur ladite bande dans la direction axiale (A-A) et dans la direction circonférentielle (C-C) ;
- évitant ainsi que ladite bande de freinage (2) ne soit contrainte sur ladite cloche (13) dans la direction radiale (R-R).

2. Ensemble (1) selon la revendication 1, dans lequel
- ladite cloche (13) comprend un bord de cloche (36) qui forme un siège de cloche à butée radiale extérieure (37) qui empêche un déplacement dans la direction radiale (R-R) en s'éloignant de l'axe de rotation (A-A) ;
- ledit élément d'entraînement (20), au moins au nombre de un, comprend au moins une extension d'élément d'entraînement radiale (35) ;
- ladite extension d'élément d'entraînement radiale (35) comprend une dent de fixation (38) qui est au moins partiellement insérée de manière amovible dans ledit siège de cloche à butée radiale extérieure (37).

3. Ensemble (1) selon l'une quelconque des revendications précédentes, dans lequel
- ladite bande de freinage (2) comprend des surfaces de freinage opposées (3, 4) adaptées pour coopérer avec des plaquettes de frein pour exercer ladite action de freinage ; et/ou dans lequel
- ladite bande de freinage comprend au moins une extension de liaison de bande radiale (6) saillante essentiellement dans la direction radiale (R-R) vers ledit axe de rotation (X-X) ; et dans lequel
- ladite extension de liaison de bande radiale (6), au moins au nombre de une, comprend au moins une surface d'appui de cloche (7 ; 8) s'étendant dans ladite direction circonférentielle (C-C) et dans ladite direction radiale (R-R), formant ainsi une surface de butée axiale pour une cloche (13) ; et dans lequel
- ladite extension de liaison de bande radiale (6), au moins au nombre de une, comprend au moins une surface d'entraînement de bande (9 ; 10 ; 11 ; 12) s'étendant dans ladite direction axiale (A-A) et dans ladite direction radiale (R-R), en formant ainsi une surface de butée tangentielle pour la bande (2) ; et dans lequel
- ladite extension de liaison de bande radiale (6), au moins au nombre de une, comprend au moins une première surface de bande axiale opposée (31 ; 32) s'étendant dans ladite direction circonférentielle (C-C) et dans ladite direction radiale (R-R), formant ainsi une surface de butée axiale.

4. Ensemble (1) selon l'une quelconque des revendications précédentes, dans lequel
ladite bande de freinage (2) comprend une pluralité d'éléments de liaison de bande (39) ;
chaque élément de liaison de bande (39) comprend
- ladite extension de liaison de bande radiale ou une première extension de liaison de bande radiale (6),
- une deuxième extension de liaison de bande radiale (40),
- une troisième extension de liaison de bande radiale (41),
- une quatrième extension de liaison de bande radiale (42) ;
dans lequel
- lesdites première, deuxième, troisième et quatrième extensions de liaison de bande radiale (6, 40, 41, 42) pour chaque élément de liaison de bande (39) entourent ledit élément d'entraînement (20), en créant ainsi des contraintes bilatérales dans la direction tangentielle (T-T) ;
et/ou dans lequel
chaque élément de liaison de bande (39) comporte quatre extensions de liaison de bande radiale (6, 40, 41, 42) opposées deux par deux et séparées par un canal circonférentiel d'élément de liaison de bande (43) et une fenêtre de bande axiale radiale (44) adaptée pour loger par coulissement ledit élément d'entraînement (20) ;
et/ou dans lequel
- ledit élément de liaison de bande (39) comprend un canal s'étendant dans la direction radiale (R-R) et dans la direction axiale (A-A) entre des portions d'extension de bande radiale de celui-ci, ce qui permet audit élément de liaison de bande (39), s'il est sollicité, de subir une déformation élastique dans la direction tangentielle (T-T) dudit élément de liaison de bande (39) ;
et/ou dans lequel
- ledit élément de liaison de bande (39) comprend un canal s'étendant dans la direction radiale (R-R) et dans la direction circonférentielle (C-C) entre des portions d'extension de bande radiale de celui-ci, ce qui permet audit élément de liaison de bande (39), s'il est sollicité, de subir une déformation élastique dans la direction axiale (A-A) dudit élément de liaison de bande (39) ;
et/ou dans lequel
- ladite première surface de bande axiale opposée et ladite première surface de cloche axiale opposée (31, 33), qui sont opposées l'une à l'autre, ladite deuxième surface de bande axiale opposée agencée dans le même plan que ladite première surface de bande axiale opposée et ladite deuxième surface de cloche axiale opposée agencée dans le même plan que ladite première surface de cloche axiale opposée (32, 34) sont présentes sur des portions d'extension de liaison de bande radiale (6, 40, 41, 42) qui sont séparées l'une de l'autre par au moins un canal permettant la déformation élastique de l'élément de liaison de bande (39), ce qui permet un couplage préchargé à l'élément d'entraînement (20), obtenant ainsi les avantages de l'effet d'étanchéité en cas de vibration du disque, ce qui réduit les cognements et les bruits et ce qui assure une étanchéité constante et un frottement constant sur les surfaces coulissantes entre l'élément d'entraînement (20) et la bande de freinage (2) et la cloche (13), en assurant ainsi une extension de la bande toujours dans les conditions optimales définies dans le projet.

5. Ensemble (1) selon l'une quelconque des revendications précédentes, dans lequel
ladite cloche (13) comprend une pluralité d'éléments de liaison de cloche (45) ;
chaque élément de liaison de cloche (45) comprend
- ladite extension de liaison de cloche radiale ou ladite première extension de liaison de cloche radiale (15),
- une deuxième extension de liaison de cloche radiale (46) ;
dans lequel
- lesdites première et deuxième extensions de liaison de cloche radiale (15, 46), pour chaque élément de liaison de cloche (45), entourent ledit élément d'entraînement (20), en créant ainsi des contraintes bilatérales dans la direction tangentielle (T-T) ;
et/ou dans lequel
chaque élément de liaison de cloche (45) comporte deux extensions de liaison de cloche radiale opposées (15, 46) séparées par une fenêtre de cloche axiale radiale (47) adaptée pour loger par coulissement ledit élément d'entraînement (20).

6. Ensemble (1) selon l'une quelconque des revendications précédentes, dans lequel
- ladite bande de freinage comprend au moins une extension de liaison de bande radiale (6) saillante essentiellement dans la direction radiale (R-R) vers ledit axe de rotation (X-X) ;
- ladite extension de liaison de bande radiale (6), au moins au nombre de une, comprend au moins une surface d'appui de cloche (7 ; 8) s'étendant dans ladite direction circonférentielle (C-C) et dans ladite direction radiale (R-R), formant ainsi une surface de butée axiale pour une cloche (13) ;
- ladite extension de liaison de bande radiale (6), au moins au nombre de une, comprend au moins une surface de bande d'entraînement (9 ; 10 ; 11 ; 12) s'étendant dans ladite direction axiale (A-A) et dans ladite direction radiale (R-R), formant ainsi une surface de butée tangentielle pour la bande (2) ;
- ladite extension de liaison de bande radiale (6), au moins au nombre de une, comprend au moins une première surface de bande axiale opposée (31 ; 32) s'étendant dans ladite direction circonférentielle (C-C) et dans ladite direction radiale (R-R), formant ainsi une surface de butée axiale.

7. Ensemble (1) selon l'une quelconque des revendications précédentes, dans lequel
- ladite surface d'appui de cloche (7 ; 8), au moins au nombre de une, se compose de deux surfaces d'appui de cloche (7 et 8) et
- lesdites deux surfaces d'appui de cloche (7 ; 8) sont dans le même plan et sont orientées du même côté que la bande de freinage (2) ; et
- lesdites deux surfaces d'appui de cloche (7 et 8) sont formées sur deux extensions de liaison de bande radiale (6, 40) adjacentes mais séparées ; et/ou dans lequel
- ladite surface de bande d'entraînement (9 ; 10 ; 11 ; 12), au moins au nombre de une, se compose de quatre surfaces de bande d'entraînement (9 et 10 et 11 et 12) ;
- lesdites quatre surfaces de bande d'entraînement (9 et 10 et 11 et 12) sont dans le même plan deux par deux (9, 10) et (11, 12) et opposées deux par deux (9, 11) et (10, 12), formant ainsi des guides d'appui coulissants pour ledit élément d'entraînement (20) ;
- lesdites quatre surfaces de bande d'entraînement (9 et 10 et 11 et 12) sont formées dans quatre extensions de liaison de bande radiale (6, 40, 41, 42) adjacentes mais séparées.

8. Ensemble (1) selon l'une quelconque des revendications précédentes, dans lequel
- ladite cloche (13) comprend au moins une extension de liaison de cloche radiale (15) saillante essentiellement dans la direction radiale (R-R) en s'éloignant dudit axe de rotation (A-A) ;
- ladite extension de liaison de cloche radiale (15), au moins au nombre de une, comprend au moins une surface d'appui de bande (16 ; 17) s'étendant dans ladite direction circonférentielle (C-C) et dans ladite direction radiale (R-R), formant ainsi une surface de butée axiale pour ladite bande de freinage (2) ;
- ladite extension de liaison de cloche radiale (15), au moins au nombre de une, comprend au moins une surface de cloche d'entraînement (18 ; 19) s'étendant dans ladite direction axiale (A-A) et dans ladite direction radiale (R-R), formant ainsi une surface de butée tangentielle pour la cloche (13) ;
- ladite extension de liaison de cloche radiale (15), au moins au nombre de une, comprend au moins une première surface de cloche axiale opposée (33 ; 34) s'étendant dans ladite direction circonférentielle (C-C) et dans ladite direction radiale (R-R), formant ainsi une surface de butée axiale.

9. Ensemble (1) selon l'une quelconque des revendications précédentes, dans lequel
- ladite surface de cloche d'entraînement (18 ; 19), au moins au nombre de une, se compose de deux surfaces de cloche d'entraînement (18 et 19), qui sont opposées l'une à l'autre pour former un guide bilatéral dudit élément d'entraînement (20) ;
- lesdites deux surfaces de cloche d'entraînement (18 et 19) sont formées dans deux extensions de liaison de bande radiale (15, 46) séparées.

10. Ensemble (1) selon l'une quelconque des revendications précédentes, dans lequel
- ledit élément d'entraînement (20) est un corps unique constitué d'un seul tenant ;
et/ou dans lequel
- ledit élément d'entraînement (20) comprend un corps d'élément d'entraînement central (48) adapté pour appuyer contre ladite bande de freinage (2) et ladite cloche (13) dans la direction tangentielle (T-T) ;
et/ou dans lequel
- ledit corps d'élément d'entraînement central (48) comprend une ouverture d'élément d'entraînement (49) permettant audit élément d'entraînement (20), s'il est sollicité, de subir une déformation élastique dans la direction tangentielle (T-T) dudit élément d'entraînement (20) en obtenant ainsi les avantages de l'effet d'étanchéité en cas de vibrations du disque, ce qui réduit les cognements et les bruits et ce qui assure une étanchéité constante et un frottement constant sur des surfaces coulissantes entre l'élément d'entraînement (20) et la bande de freinage (2) et la cloche (13), en assurant ainsi une extension de la bande toujours dans les conditions optimales définies dans le projet ;
et/ou dans lequel
- ledit élément d'entraînement (20) comprend deux brides d'appui opposées (50, 51) permettant d'appuyer et de précharger dans la direction axiale (A-A) l'élément d'entraînement sur la bande de freinage (2) d'un côté, et sur la cloche (13) de l'autre côté ;
et/ou dans lequel
- chacune desdites brides d'appui (50, 51) se relie à un corps d'élément d'entraînement central (48) au moyen de décharges d'élément d'entraînement (52) adaptées pour éviter l'effet d'entaille et le contact avec la bande de freinage (2) et la cloche (13).

11. Ensemble (1) selon l'une quelconque des revendications précédentes, dans lequel
- l'entraînement tangentiel entre ladite bande de freinage (2) et ladite cloche (13) n'intervient qu'au moyen dudit élément d'entraînement (20), évitant ainsi un contact direct dans la direction tangentielle (T-T) ou dans la direction circonférentielle (C-C) entre ladite bande de freinage (2) et ladite cloche (13).

12. Ensemble (1) selon l'une quelconque des revendications précédentes, dans lequel
- ladite extension de liaison de bande radiale ou ladite première extension de liaison de bande radiale (6) et ladite deuxième extension de liaison de bande radiale opposée (40), et ladite extension de liaison de cloche radiale ou ladite première extension de liaison de cloche radiale (15) et ladite deuxième extension de liaison de cloche radiale (46) et/ou ladite troisième extension de liaison de bande radiale (41) et ladite quatrième extension de liaison de bande radiale opposée (42),
permettent de guider ladite bande de freinage (2) à la fois dans les directions de marche avant et de marche arrière du véhicule.

13. Ensemble (1) selon l'une quelconque des revendications précédentes, dans lequel
- ladite bande de freinage (2) est constituée d'un matériau différent du matériau de ladite cloche (13) ;
dans lequel
- ladite bande de freinage (2) est constituée de fonte ;
ou dans lequel
- ladite bande de freinage (2) est constituée de titane ;
ou dans lequel
- ladite bande de freinage (2) est constituée d'un alliage de titane ;
ou dans lequel
- ladite cloche (13) est constituée d'aluminium ;
ou dans lequel
- ladite cloche (13) est constituée d'acier ;
ou dans lequel
- ledit élément d'entraînement (20) est constitué d'acier ;
ou dans lequel
- ledit élément d'entraînement (20) est constitué de titane.

14. Ensemble (1) selon l'une quelconque des revendications précédentes, dans lequel
- ledit élément de liaison de cloche (45) comprend des chanfreins ou des glissières de cloche (53) adaptés pour permettre le déplacement dudit élément d'entraînement (20) de sorte que l'élément d'entraînement puisse appuyer sur ledit élément de liaison de cloche (45) et contraindre ladite bande de freinage (22) sur ladite cloche (13) ; et/ou dans lequel
- lesdits chanfreins ou glissières de cloche (53) sont au sein de ladite extension de liaison de cloche radiale (15 ; 46), au moins au nombre de une, pour permettre le coulissement forcé de l'élément d'entraînement (20) et le serrage en sandwich de la cloche (13) contre la bande de freinage (2) ;
et/ou dans lequel
- ledit élément d'entraînement (20) comprend des chanfreins ou des glissières d'élément d'entraînement (54) adaptés pour permettre le déplacement/le coulissement dudit élément d'entraînement (20) de sorte que l'élément d'entraînement puisse coulisser et appuyer sur ledit élément de liaison de cloche (45) et contraindre ladite bande de freinage (2) sur ladite cloche (13).

15. Ensemble (1) selon l'une quelconque des revendications précédentes, dans lequel
- ladite bande de freinage (22) comprend des surfaces de freinage opposées (3, 4) et un bord de bande de freinage intérieur radial (5) et un bord de bande de freinage extérieur radial (55) ;
et dans lequel
- ladite bande de freinage (2) comprend au moins une surface de bande de freinage intérieure inclinée (56) joignant au moins l'une desdites surfaces de freinage (3, 4) et ledit bord de bande de freinage intérieur radial (5) ;
et/ou dans lequel
- ladite bande de freinage (2) comprend au moins une surface de bande de freinage extérieure inclinée (57) joignant au moins l'une desdites surfaces de freinage (3, 4) et ledit bord de bande de freinage extérieur radial (55) ;
et/ou dans lequel
au moins une surface de bande de freinage intérieure inclinée (56) joignant au moins l'une desdites surfaces de freinage (3, 4) et ledit bord de bande de freinage intérieur radial (5) est prévue entre deux éléments de liaison de bande adjacents (39) associés à deux éléments de liaison de cloche adjacents (45), créant ainsi de larges fenêtres entre la cloche (13) et la bande de freinage (2).

16. Ensemble (1) selon l'une quelconque des revendications précédentes, dans lequel
- ladite bande de freinage (2) comprend deux plaques de bande (58, 59) séparées par au moins un canal de ventilation (60) et reliées par des éléments de liaison de plaque de bande (61) [par exemple des ailettes ou des chevilles] qui délimitent ledit canal de ventilation (60), au moins au nombre de un,
- ledit canal de ventilation (60) conduit dans ledit bord de bande de freinage extérieur radial (55) ayant au moins une ouverture de section circulaire (70) ; et/ou dans lequel
- ledit canal de ventilation (60) conduit dans ledit bord de bande de freinage extérieur radial (55) ayant au moins une ouverture de section elliptique (71).

17. Ensemble (1) selon l'une quelconque des revendications précédentes, dans lequel
- ladite bande de freinage (2) comprend des surfaces de freinage opposées (3, 4) ; et/ou dans lequel
- au moins l'une desdites surfaces de freinage (3, 4) comprend au moins une rainure de bande de freinage (62) ou une première rainure de bande de freinage ; ou dans lequel
au moins l'une desdites surfaces de freinage (3, 4) comprend au moins une rainure de bande de freinage (62) ou une première rainure de bande de freinage, et dans lequel
- ladite rainure de bande de freinage (62), au moins au nombre de une, se compose de deux rainures (64) pour former un module de rainures (63) ;
dans lequel
- lesdites première et deuxième rainures de bande de freinage (62, 64) de chaque module (63) sont symétriques et en miroir par rapport à un axe ayant une direction radiale (R-R) ;
et/ou dans lequel
- ledit module de rainures (63), au moins au nombre de un, est une pluralité de modules de rainures (63) répartis de manière équidistante circonférentiellement sur ladite bande de freinage (2) ;
ou dans lequel
au moins l'une desdites surfaces de freinage (3, 4) comprend au moins une rainure de bande de freinage (62) ou une première rainure de bande de freinage, et
dans lequel
- chacune desdites rainures (62, 64) est une rainure avec un bord formant un périmètre fermé, ou une rainure de bord fermé (65), en évitant ainsi des rainures conduisant vers l'extérieur depuis lesdites surfaces de freinage (3, 4),
ou dans lequel
au moins l'une desdites surfaces de freinage (3, 4) comprend au moins une rainure de bande de freinage (62) ou une première rainure de bande de freinage, et
dans lequel
- chacune desdites rainures (62, 64) comprend un tronçon de rainure droit (66) s'étendant d'une manière essentiellement droite et agencé pratiquement parallèlement à une direction radiale (R-R) ; et
- chacune desdites rainures (62, 64) comprend un tronçon de rainure droit incliné (67) s'étendant d'une manière essentiellement droite et agencé incliné par rapport audit tronçon de rainure droit (66) et est ouverte et jointe audit tronçon de rainure droit (66) ;
dans lequel
- l'extension droite théorique dudit tronçon de rainure droit (66) s'étendant d'une manière essentiellement droite et agencé pratiquement parallèlement à une direction radiale (R-R) est agencée adjacente aux côtés de ladite extension de liaison de bande radiale (6), au moins au nombre de une ;
ou dans lequel
au moins l'une desdites surfaces de freinage (3, 4) comprend au moins une rainure de bande de freinage (62) ou une première rainure de bande de freinage, et
dans lequel
- chacune desdites rainures (62, 64) comprend un fond de rainure (68) et dans lequel une pluralité de trous de rainure (69) se trouvent à l'intérieur dudit fond de rainure (68) ;
et/ou dans lequel
- ladite pluralité de trous de rainure (69) met ledit canal de ventilation (60) en communication fluidique avec lesdites surfaces de freinage (3, 4).

18. Procédé de liaison d'une bande de freinage (2) à une cloche (13), dans lequel il est prévu les étapes suivantes :
- la fourniture d'un ensemble (1) tel que décrit dans l'une quelconque des revendications précédentes ;
- l'appui dudit élément d'entraînement (20) sur ladite bande de freinage (2) dans une position permettant de coupler librement ladite cloche (13) à la bande de freinage (2) ;
- l'appui de ladite cloche (13) sur ladite bande de freinage (2) ;
- le déplacement dudit élément d'entraînement (20) en passant :
- d'une position dans laquelle ledit élément d'entraînement (20) évite d'appuyer sur la cloche (13) ;
- à une position dans laquelle ledit élément d'entraînement (20) appuie sur la cloche (13) et contraint ladite cloche (13) sur ladite bande de freinage (2) dans une direction axiale (A-A) et dans une direction circonférentielle (C-C), évitant ainsi que ladite bande de freinage (2) ne soit contrainte sur ladite cloche (13) dans une direction radiale (R-R).
